(19) Europäisches Patentamt
European Patent Office
Office européen des brevets

(11) EP 4 339 874 A1

(12) **EUROPEAN PATENT APPLICATION**
published in accordance with Art. 153(4) EPC

(43) Date of publication:
**20.03.2024 Bulletin 2024/12**

(21) Application number: **22804799.9**

(22) Date of filing: **01.06.2022**

(51) International Patent Classification (IPC):
***G06Q 50/18*** *(2012.01)* ***G06Q 10/06*** *(2023.01)*

(52) Cooperative Patent Classification (CPC):
**G06Q 10/06; G06Q 50/18**

(86) International application number:
**PCT/JP2022/022254**

(87) International publication number:
**WO 2022/244892 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.05.2021 JP 2021082843**

(71) Applicant: **IPDefine Ltd.**
**Tokyo 1510065 (JP)**

(72) Inventor: **OKAMOTO Mitsuhiro**
**Tokyo 151-0065 (JP)**

(74) Representative: **Patpol Kancelaria Patentowa Sp. z o.o.**
**Nowoursynowska 162J**
**02-776 Warszawa (PL)**

Remarks:
The restoration of the right of priority granted by the receiving Office is effective before the EPO (R. 49ter.1(a) PCT).

# (54) COMPANY EVALUATION DEVICE AND COMPANY EVALUATION METHOD

(57) A company evaluation device comprises an evaluation processing means that is configured to derive the evaluation results of company using weight information that reflects in corporate evaluation the degree of relevance of information regarding one or more industrial property rights linked to a company to management indicators incorporated in the management policy of the company. A company evaluation program is for causing a computer to function as the evaluation processing means. According to the company evaluation device and the company evaluation program, it is possible to objectively evaluate companies from the viewpoint of management indicators and derive highly reliable evaluation results.

Fig. 2

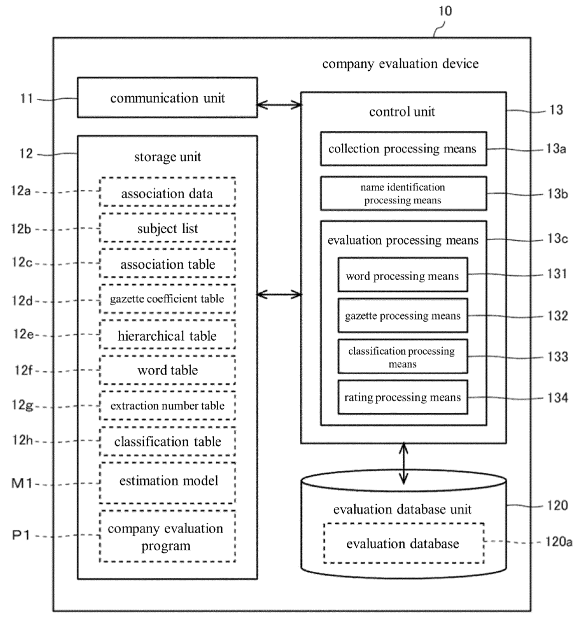


EP 4 339 874 A1

## Description

TECHNICAL FIELD

The present disclosure relates to a company evaluation device and a company evaluation method for objectively evaluating a company.

BACKGROUND ART

In recent years, indicators such as ESG or SDGs, which are incorporated into corporate management policies (hereinafter also referred to as management indicators), are mainly regarded as important among institutional investors. Here, ESG stands for Environment, Social, and Governance. SDGs is an abbreviation for Sustainable Development Goals.

However, it is difficult for investors to individually investigate which companies are taking which initiatives. Forthis reason, rating agencies, which rate a variety of companies, provide investors with the results of their evaluation of companies in view of management indicators. For example, the company rating execution device of Patent Document 1 evaluates companies from an ESG perspective based on news articles collected on the internet.

PRIOR ART DOCUMENT

Patent Document 1: JP 2021-504789 A

SUMMARY

Technical Problem

However, the reality is that many rating agencies have no common criteria for assessing companies in terms of management indicators, and each rating agency uses its own methods to rate companies. Therefore, there is a risk that the results of company evaluations may include the subjectivity and values of each rating agency, making it difficult to obtain a sense of fairness. Thus, a method to increase objectivity and reliability when assessing companies from the perspective of management indicators is desired.

The purpose of the present disclosure is to solve the above-mentioned problems and to provide a company evaluation device and a company evaluation method that objectively evaluates companies from the perspective of management indicators and derives highly reliable evaluation results.

Solution to Problem

A company evaluation device according to one embodiment of the disclosure, comprises an evaluation processing means that is configured to derive the evaluation results of company using weight information that reflects in company evaluation the degree of relevance of information regarding one or more industrial property rights linked to a company to management indicators incorporated in the management policy of the company.

A method of company evaluation according to one embodiment of the disclosure, comprises to derive the evaluation results of company using weight information that reflects in corporate evaluation the degree of relevance of information regarding one or more industrial property rights linked to a company to management indicators incorporated in the management policy of the company.

Advantageous Effects

The present disclosure derives the evaluation results of company using a weight that reflects the degree of relevance of the information on one or more industrial property rights linked to the company to the management indicators incorporated into the management policy of the company. As a result, the aspect of industrial property rights can be adopted in the evaluation of companies based on management indicators. Here, industrial property rights are examined by the patent offices of the respective countries, so that these registered rights have objective utility. In obtaining the industrial property right, the applicant usually prepares the application documents to ensure objective usefulness on the assumption that an examination will be carried out. Therefore, the evaluation results based on information on industrial property rights are necessarily highly objective information. As a result, according to the present disclosure, companies are assessed objectively based on management indicators, and highly reliable evaluation results are derived.

BRIEF DESCRIPTION OF DRAWINGS

Fig. 1: A block diagram illustrating the company evaluation device and its peripheral configuration of the Embodiment.
Fig. 2: A block diagram illustrating the functional configuration of the company evaluation device in Fig. 1.
Fig. 3: A schematic illustration of an example of the subject list created by a name identification processing means in Fig. 2.
Fig. 4: An illustration of the relationship between the weight information stored in the storage unit in Fig. 2 and the information on industrial property rights.
Fig. 5: An illustration of the outline of the gazette coefficient obtained by the gazette processing means in Fig. 2.
Fig. 6: An illustration of the example of the classification information extracted and collected by the classification processing means in Fig. 2.
Fig. 7: A schematic illustration of the classification table stored in the storage unit in Fig. 2.
Fig. 8: A schematic illustration of the word table stored in the storage unit in Fig. 2.
Fig. 9: A schematic illustration of the extraction table stored in the storage unit in Fig. 2.
Fig. 10: An illustration of the classification score acquired by the classification processing means in Fig. 2.
Fig. 11: A flowchart is an example of the overall process flow of the company evaluation method in the Embodiment.
Fig. 12: A flowchart of the operation example for deriving the association score in the word processing process in the company evaluation method of the Embodiment.
Fig. 13: A flowchart of the operation example for deriving the gazette coefficient in the gazetteer processing process in the company evaluation method of the embodiment.
Fig. 14: A flowchart of the operation example for the classification processing process in the company evaluation method of the embodiment.
Fig. 15: An illustration of the example of the classification table related to the variation of the Embodiment.
Fig. 16: A flowchart of the operation example of the creation method of the classification table related to the variation of the Embodiment.
Fig. 17: A flowchart of the operation example for the classification processing process in the company evaluation method related to the variation of the Embodiment.

DETAILED DESCRIPTION

Embodiment

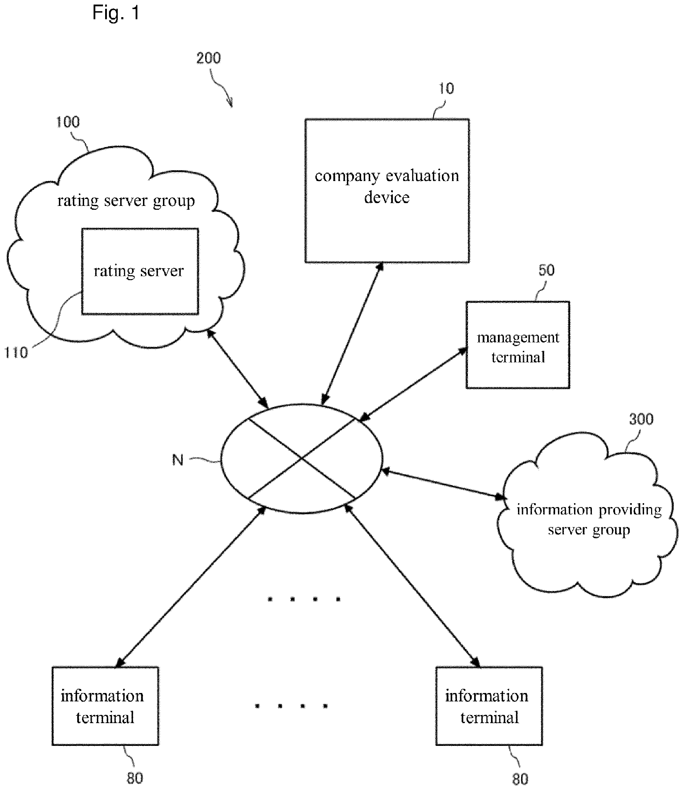

Referring to Fig. 1, an example of the company evaluation device and its peripheral configuration of the Embodiment is explained. A company evaluation device 10 evaluates companies from the perspective of management indicators by using an algorithm that analyzes the degree of relationship between information on one or more industrial property rights linked to the company being evaluated and management indicators incorporated in the company's business policy. The company evaluation device 10 has the function of evaluating companies from the viewpoint of management indicators using machine learning. The management indicators are indicators that take environmental and social aspects into consideration and are especially incorporated into medium- to long-term business policies.
The company evaluation device 10 is communicably connected via a network N such as the Internet to external devices such as a management terminal 50, one or more information terminals 80, a rating server group 100, and an information providing server group 300. The company evaluation device 10 is configured with an on-premises physical server, or a cloud server based on cloud computing, or a system combining these.
Here, industrial property rights refer to patent rights, utility model rights, design rights, and trademark rights among intellectual property rights, but in this embodiment, especially patent rights and utility model rights are called industrial property rights. Therefore, information on industrial property rights includes information on publications (patent gazettes, patent publication gazettes, utility model gazettes, etc.), applicants, rights holders, inventors, and creators, as well as information on application progress and examinations. Information regarding examination includes citation information indicating the number of times a gazette related to industrial property rights has been cited in a notice of reasons for rejection (number of citations). Information regarding examination includes citation information. The information regarding the examination includes information such as a search report of a patent search company, search processing by an examiner, and contents of the examination.
In principle, information on industrial property rights corresponds to one application and includes not only information on applications that have been granted rights (including those that have expired due to the expiration of the term), but also information on applications that have not been granted rights, and information regarding applications under examination or awaiting examination before obtaining rights. Applications for which rights were not granted include applications for which a request for examination was not filed within a prescribed period and applications for which a decision of refusal has become final. Hereinafter, information regarding industrial property rights will also be referred to as "rights-related information." The rights-related information includes at least information on the application number.

A rating server 110 processes corporate ratings from the perspective of business indexes that are incorporated into business policies. Namely, the rating server 110 is a server used and managed by a rating agency such as MSCI (Morgan Stanley Capital International), FTSE, or Sustainalytics. The rating server group 100 is assumed to include one or more rating servers 110. The rating server 110 is configured by a cloud server based on cloud computing, an on-premises physical server, or a system combining these.

The company evaluation device 10 can construct a company evaluation system 200 in cooperation with the rating server 110. Namely, the company evaluation device 10 evaluates the company from the viewpoint of management indicators based on the rights-related information of the company being evaluated and provides the evaluation results to one or more rating servers 110. Therefore, the rating server 110 can incorporate the viewpoint of industrial property rights into the company's rating process, thereby increasing the objectivity of the information provided to customers.

The management terminal 50 is for managing information within the company evaluation device 10. The management terminal 50 is, for example, software within the company evaluation device 10 and PCs (Personal Computers) used by a company that manages data. PCs include tablet PCs, notebook PCs, desktop PCs, and the like. The administrator can adjust/change the database information, programs, and various parameters in the company evaluation device 10 via the management terminal 50.

The information-providing server group 300 is assumed to be, for example, servers in various countries around the world that provide rights-related information through an API (Application Programming Interface). In each server making up the information providing server group 300, one data set of rights-related information is linked to a company or the like that is an applicant or right holder. Each server configuring the information providing server group 300 is configured by a cloud server based on cloud computing, an on-premise physical server, or a system combining these.

The information providing server group 300 includes a server device that stores a database (hereinafter referred to as an intellectual property database) in which one family ID is linked to one or more name data indicating the applicant or right holder of one invention or device. Nowadays, many companies file patent applications for the same invention in multiple countries, and a group of such patent applications is called a patent family. A family ID is identification information that is commonly given to patent families, and the same family ID is given to the same company no matter how different the company names are.

The information terminal 80 accesses the database provided by the company evaluation device 10 or the rating server 110 in response to a user's operation, acquires and displays various information in the database. Namely, the information terminal 80 acquires a rating score, which is the result of an objective evaluation of a company, from the company evaluation device 10, and provides information on the acquired rating score to the user. The information terminal 80 acquires an objective rating score that reflects objectivity based on industrial property rights from the rating server 110 and provides information on the acquired objective rating score to the user.

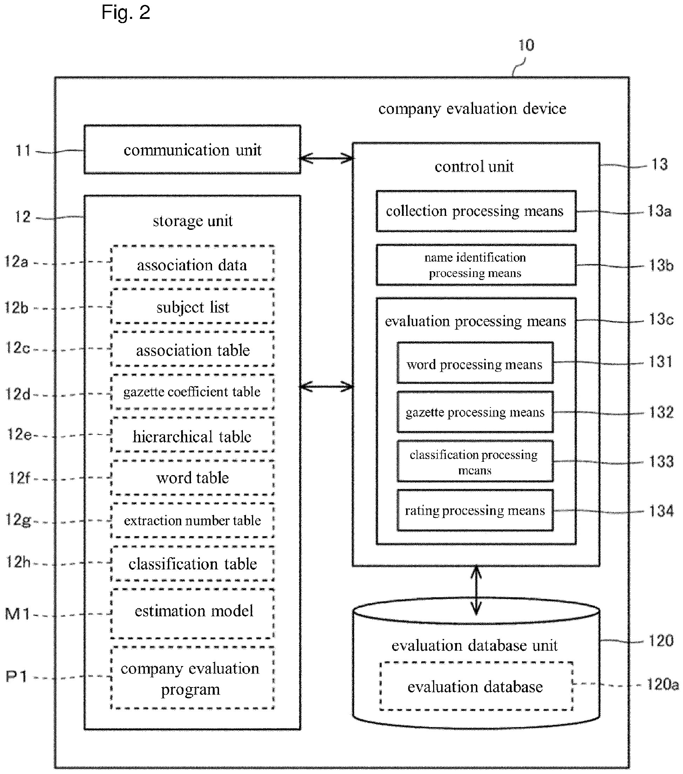

Referring to Fig. 2, the company evaluation device 10 includes a communication unit 11, a storage unit 12, a control unit 13, and an evaluation database unit 120. The communication unit 11 is an interface through which the control unit 13 performs wired or wireless communication with external devices such as the management terminal 50, the information terminal 80, the rating server group 100, and the information providing server group 300.

The storage unit 12 stores various data required for company evaluation in addition to operating programs of the control unit 13 such as the company evaluation program P1. The storage unit 12 stores weight information that reflects the degree of relevance (degree of association) of one or more pieces of rights-related information linked to a company to a business index in a company evaluation.

The weight information includes at least one of the location coefficients, an association coefficient d, the number of searches, an association score U, a gazette coefficient e, a citing coefficient f, the classification score H, and the word coefficient D. The weight information may include at least one of a hierarchy coefficient h1 and an explanation coefficient h2. The weight information may include the number of extractions and the extraction coefficient K. The weight information may include a classification coefficient g. The weight information may include an elapsed coefficient based on the filing date, patenting date, etc. related to a subject information. The weight information may include a relaxation coefficient for mitigating the influence of an unexpected increase in the number of searches on the evaluation results of company.

The storage unit 12 stores table information such as association data 12a, a subject list 12b, relaxation table, an association table 12c, a gazette coefficient table 12d, a hierarchical table 12e, a word table 12f, extraction number table 12g, and a classification table 12h. The storage unit 12 may store an estimation model M1 for estimating the validity of the content of the gazette related to rights-related information. The storage unit 12 can be configured with RAM (Random Access Memory), ROM (Read Only Memory), PROM (Programmable ROM) such as flash memory, SSD (Solid State Drive), HDD (Hard Disk Drive) so on.

The control unit 13 includes a collection processing means 13a, a name identification processing means 13b, and an evaluation processing means 13c. The collection processing means 13a periodically collects rights-related information through an API or the like. For example, the collection processing means 13a collects information such as patent gazettes, patent publication gazettes, and utility model gazettes from all over the world as rights-related information. The collection processing means 13a has a function of normalizing the collected rights-related information by arranging the information boundaries and organizing the file format. The collection processing means 13a may collect data including non-patent literature from around the world, various technical papers, technical reports, technical standards, websites of companies, research institutes, universities, articles, catalogs on the web, blogs, and SNS (social networking services), so on, and use such data to derive the gazette coefficient e.

The collection processing means 13a collects a plurality of keywords that are considered to be related to management indicators at a rating agency from a database provided in the rating server group 100, and these keywords are collectively stored in the storage unit 12 as data 12a. Hereinafter, each keyword listed in the association data 12a will be referred to as an association word W. The association words W collected by the collection processing means 13a from the rating server group 100 can be used when evaluating the degree of relevance between management indicators and rights-related information.

The collection processing means 13a has a function of accessing an external server capable of searching for peripheral words such as synonyms and suggested keywords and extracting peripheral words of the association words W collected from the rating server group 100. The collection processing means 13a may also store the extracted peripheral words as the association words W in the storage unit 12. Namely, the collection processing means 13a has a function of expanding the association words W collected from the rating server group 100 to include synonyms. Alternatively, software for a thesaurus capable of searching for peripheral words may be stored in the storage unit 12 or the like, and the collection processing means 13a may expand the association words W using the software.

By the way, there is a possibility that peripheral words that are inappropriate for use in company evaluations may be extracted because they have low relevance to management indicators when the collection processing means 13a collects peripheral words of the association word W collected from the rating server group 100. Therefore, the collection processing means 13a has a function of selecting peripheral words associated with the association words W collected from the rating server group 100 based on their relevance to management indicators. Natural language processing or machine learning can be used for the function of selecting peripheral words. For example, the collection processing method 13a converts the relevant words W collected from the rating server group 100 into a distributed representation using Word2Vec (a natural language processing technology for vectorizing words) and also converts the extracted peripheral words into a distributed representation, then the peripheral words may then be selected based on the degree of agreement between these vectors.

The name identification processing means 13b accesses the intellectual property database of the information providing server group 300, extracts and organizes a plurality of rights-related information that is the subject of listing. For example, rights-related information for a specified period such as 10 years or 20 years, rights-related information for a designated area such as a country or a region, or rights-related information for a specified period in a designated area are the subjects for listing. The subjects to be listed can be set from the management terminal 50 and can be changed as appropriate.

The name identification processing means 13b extracts each information linked to the rights-related information within the specified period if rights-related information for a specified period is subject to listing. The name identification processing means 13b extracts each information linked to the rights-related information of each country if for example, if rights-related information in designated areas such as Japan, the United States, China, and Europe is subject to listing. The name identification processing means 13b extracts each information linked to the rights-related information within the specified period in the designated area if rights-related information for a specified period in some designated area is subject to listing. Of course, the objects to be listed can be arbitrarily set, and the name identification processing means 13b can also set all the rights-related information in the intellectual property database to be the objects to be listed.

Hereinafter, the rights-related information subjected for listing will also be referred to as "subject information". That is, the name identification processing means 13b accesses the intellectual property database and extracts the application number included in each of the plurality of subject information, and the name data and family ID linked to each of the application numbers. Then, the name identification processing means 13b organizes the application number and name data based on the family ID and creates the subject list 12b.

If one company has filed only one application, the name identification processing means 13b creates the subject list 12b by associating a plurality of name data linked to the same family ID with common data that is at least one of a common name and common identification information. The common data is name data identified based on family ID.

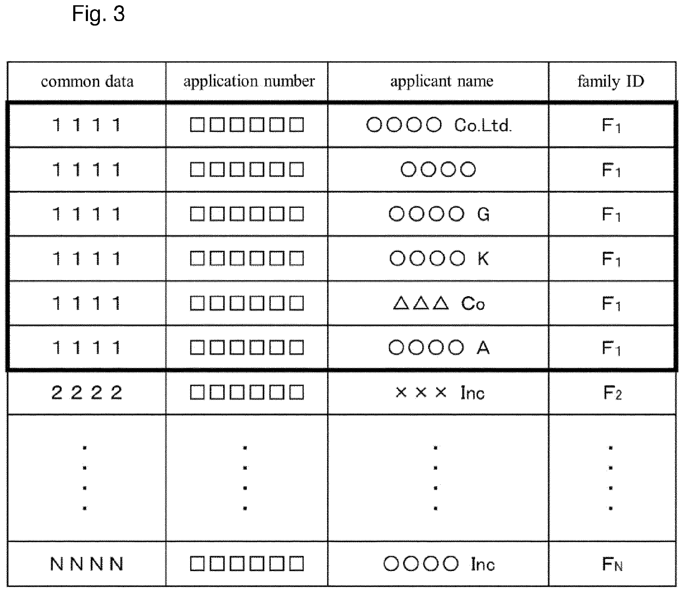

Fig. 3 shows an example of the subject list 12b in which common data, application number, name data, and family ID are associated with each subject information. In Fig. 3, the family IDs are abbreviated as F1 to FN (N is an arbitrary natural number), and N corresponds to the number of subject information (subject information 1 to N). Note that in Fig. 3, information associated with the family ID "F1" is surrounded by a thick line, indicating that information below that is also sorted by family ID. The subject list 12b may include registration numbers.

The name identification processing means 13b may use one of the pluralities of name data having a common family ID as common data or may use characters common to these as common data. The name identification processing means 13b may separately generate common data. Note that in Fig. 3, to clarify the correspondence with the family ID, 1 to N are used in association with the common data for convenience. The name identification processing means 13b can perform accurate name identifying processing by uniform processing using family IDs even if there is no sense of unity among a plurality of name data corresponding to one company.

By the way, if one company has filed multiple applications, multiple family IDs will be assigned to the one company. Furthermore, in the case of a joint application, one family ID will be assigned to two or more companies. Therefore, the name identification processing means 13b groups a plurality of name data made up of one family ID and one or more name data linked to this for each company and assigns unique common data to each group. That is, the name identification processing means 13b groups the name data (family ID) for each company based on the commonality and similarity of the name data constituting each of the plurality of name data, and as in the example of Fig. 3, the subject list 12b is created by assigning unique common data to each name data within the group. As a result, the same common data is associated with the application number and name data of the same company, so that evaluation for each company can be performed with high accuracy.

The evaluation processing means 13c obtains the evaluation results of the company from the viewpoint of management indicators by using the weight information which reflects the degree of relevance of one or more rights-related information linked to a company to the management indicators. The evaluation processing method 13c searches for a plurality of association words W related to management indicators from one or more rights-related information associated with a company, and obtains evaluation results for the company by using the weight information associated with the searched association words W. The weight information associated with the association word W includes the relevance factor d set for at least one of the multiple association words W, the number of searches for the association word W, and the location coefficient set according to the location of the association word W. In this embodiment, the evaluation processing means 13c obtains the evaluation score Ts and the rating score as the evaluation results of the company.

Although the evaluation processing method 13c may search for words that exactly match the association word W, from the viewpoint of ensuring search accuracy, it is recommended to search for words based on the degree of semantic match with the association word W using natural language processing such as Word2Vec or Doc2Vec. For example, the evaluation processing method 13c performs morphological analysis on at least part of the rights-related information to decompose it into morphemes with part-of-speech information, and then converts each morpheme into a distributed representation (Here, the morphemes made into a distributed representation are referred to as element vectors). Then, the evaluation processing means 13c preferably compares the vector obtained by the distributed representation the association word W with each element vector, and searches for an element vector with a degree of matching equal to or higher than a certain level. Namely, the evaluation processing means 13c may be configured to perform a similar search for association words W.

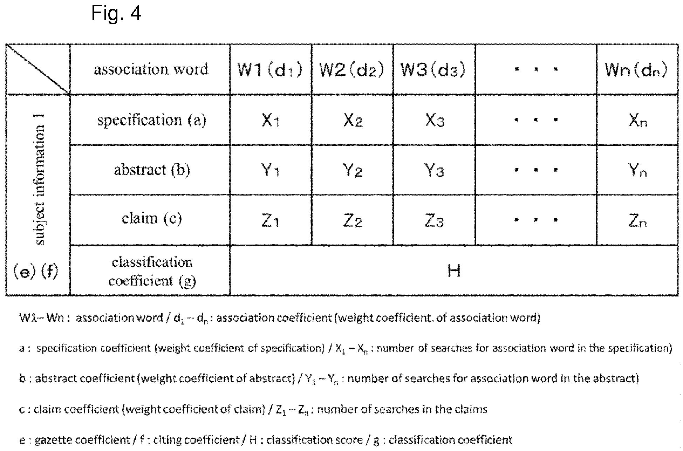

Referring to Fig. 4, various weight coefficients included in the weight information is explained. Although Fig. 4 illustrates one subject information, weight information is set for all subject information.

As shown in Fig. 4, it is assumed that n association words W1 to Wn (n is an arbitrary natural number) are set, and the association coefficients d are the association coefficients d1 to dn individually set for each association word W. The association coefficients d1 to dn do not all have to be different values, and some may overlap. Of course, Fig. 4 shows an example in which a relevance factor d is set for all the multiple association words W, including without limitation, and a relevance factor d may be set for only some of the multiple association words W. Namely, the association coefficient d may be set to at least one of the pluralities of association words W.

Here, the location is information indicating where the association word W exists in the rights-related information. In this embodiment, a specification coefficient a, which is the weight coefficient when the association word W exists in the specification, an abstract coefficient b, which is the weight coefficient when the association word W exists in the abstract, and a claim coefficient c, which is the weight coefficient when the association word W exists in the claim are used as location coefficients.

Namely, the location coefficients include the specification coefficient a corresponding to the specification, the abstract coefficient b corresponding to the abstract, and the claim coefficient c corresponding to the claims. The abstract coefficient b is preferably set larger than the specification coefficient a, and the claim coefficient c is preferably set larger than the abstract coefficient b. In other words, the specification coefficient a, the abstract coefficient b, and the claim coefficient c are made to satisfy the relationship "$a < b < c$" for example, the specification coefficient a is 1, the abstract coefficient b is 3, and the claim coefficient c is 5. This means that while the technical scope of the invention is defined based on the claims, the specification also includes content that has little relevance to the scope of rights, so the presence of the relevant word W in the claims is considered to have a relatively high relevance to the management indicators. Another factor is that the specification contains more information than the claims and abstract and the same terms may be repeated many times. Note that since the abstract often contains an outline or excerpt of the claims, it is more relevant to the management indicators if the association word W is written in the abstract than in the specification. Of course, the specification coefficient a, the abstract coefficient b, and the claim coefficient c may be set so that the relationship "a ≦ b ≦ c" is established.

The gazette coefficient e is a weight coefficient that is set according to the degree of validity of the contents of the gazette and is based on the premise that the industrial property right is a patent right or a utility model right. The gazette coefficient e may be set in stages according to preset conditions or may be determined individually for each subject information through an analysis process based on terms included in the subject information. The citing coefficient f is a weight coefficient that is set according to the times cited of patent gazettes. The classification coefficient g is a weight coefficient for adjusting the balance between the association score U and the classification score H, if the balance is adjusted by calculating the association score U and the classification score H, the classification coefficient g becomes unnecessary.

The classification score H is set for each classification code in the patent classification on the premise that the industrial property right is the patent right or the utility model right. Patent classification refers to CPC or IPC and so on. In such a patent classification, a plurality of classification codes is arranged in a hierarchical structure, and each classification code is associated with an explanation text. Namely, the classification code is associated with hierarchical data, which is information about the hierarchy of the classification code, and explanation data, which is information about the explanation text of the classification code. Hereinafter, information compiling a classification code, both hierarchical data and explanation data linked thereto is referred to as classification information. The classification score H can be determined by calculation using the hierarchy coefficient h1 associated with the hierarchy data and the explanation coefficient h2 associated with the explanation data.

As shown in Fig. 2, the evaluation processing means 13c includes a word processing means 131, a gazette processing means 132, a classification processing means 133, and a rating processing means 134. The word processing means 131 calculates the association score U for each subject information by calculating the following formula (1) for each processing means.

$$U = a\sum_{k=1}^{n} d_k \times X_k + b\sum_{k=1}^{n} d_k \times Y_k + c\sum_{k=1}^{n} d_k \times Z_k \quad \cdots \quad (1)$$

Namely, the word processing means 131 searches for each association word W from the subject information and determines the location of the association word W and the number of association words W (searches). In this embodiment, the word processing means 131 has a function of performing a similarity search for association words W based on natural language processing. Then, the word processing means 131 calculates the location coefficients (a to c), the association coefficients dk, and the number (of searches) (Xk to Zk) for all the association words W and calculates the association score U by the sum of these products. The word processing means 131 stores the calculated association score U in the storage unit 12 in association with the subject information. For example, the word processing means 131 creates the association table 12c that associates subject information with association scores U.

By the way, if the association word W (including similar words) is included in something that is frequently used in the specification, such as the name of the invention or the names of constituent parts, the number of searches will be higher than expected, and the reliability of the association score U will be affected. Therefore, for example, an upper limit value of the number of searches may be set, and when the number of searches exceeds the upper limit value, the word processing means 131 may replace the number of searches used to calculate the association score U with the upper limit value.

In addition, in order to suppress a decrease in the reliability of the association score U due to an unexpectedly large number of searches, a relaxation coefficient for mitigating the influence of an increase in the number of searches on the association score U is set in advance and stored in the storage unit 12. For example, it is preferable that a relaxation table in which the number of searches and relaxation coefficients are associated is stored in the storage unit 12, and the word processing means 131 calculates the relaxation coefficient by comparing the obtained number of searches with the relaxation table. In this case, the word processing means 131 may calculate the association score U using, for example, a value obtained by multiplying the number of searches by a relaxation coefficient instead of the number of searches. Furthermore, the word processing means 131 may be configured to use both a method using an upper limit value of the number of searches and a method using a relaxation coefficient. Of course, the calculation of the association score U may reflect only whether the association word W has been searched. Namely, in calculating the association score U, the word processing means 131 may treat the case where the number of searches is one and the case where there is a plurality of searches in the same way.

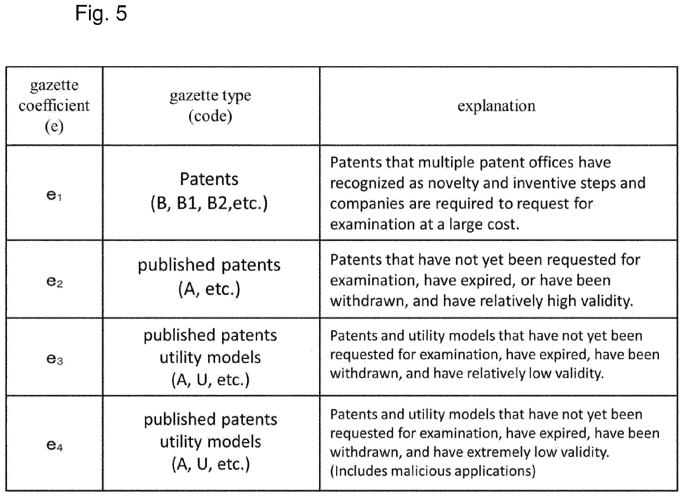

The gazette processing means 132 calculates the gazette coefficient e for each subject information. Fig. 5 is an illustration of the outline of the gazette coefficient e. As shown in Fig. 5, the gazette coefficient e is configured to include a gazette coefficient e1, a gazette coefficient e2, a gazette coefficient e3, and a gazette coefficient e4. The gazette coefficient e1 corresponds to the patent gazette. The gazette coefficient e2 corresponds to patent gazettes that are considered to have relatively high effectiveness. The gazette coefficient e3 corresponds to patent gazette that are considered to have relatively low effectiveness or gazette related to utility models that are considered to have relatively low effectiveness. The gazette coefficient e4 is considered to patent gazette that is extremely low effectiveness among patent gazettes or gazette related to utility models that are considered to have relatively low effectiveness. It is preferable that the gazette coefficient e2 is set smaller than the gazette coefficient e1, the gazette coefficient e3 is set smaller than the gazette coefficient e2, and the gazette coefficient e4 is set smaller than the gazette coefficient e3.

By the way, the discriminant processing between the gazette coefficient e1 and the gazette coefficients e2 to e4 can be uniformly performed based on the gazette type, that is, the code attached to each gazette. On the other hand, the accuracy of discrimination between the gazette coefficient e2, the gazette coefficient e3, and the gazette coefficient e4 is improved by adopting analysis processing based on machine learning, rather than by using only the gazette type. Therefore, the gazette processing means 132 has a function of performing a predetermined analysis process for each subject information to obtain the gazette coefficient e. The gazette processing means 132 preferably creates the gazette coefficient table 12d that associates the subject information with the gazette coefficients e.

In this embodiment, the gazette processing means 132 is configured to obtain the gazette coefficient e using the estimation model M1 stored in the storage unit 12 or an external storage device. The estimation model M1 is a trained model that outputs the gazette coefficient e indicating the effectiveness of the contents of the gazette. The contents of the gazette include at least one of the claims and the specification and may also include the abstract and the drawings. The validity of the contents of the gazette is analyzed from the perspective of novelty and inventive step, that is, from the perspective of invalidity, and information regarding examination is also included in the analysis. The estimation model M1 may be configured to output not only the gazette coefficient e but also information that is the basis for deriving the gazette coefficient e. Fig. 2 shows an example in which the estimation model M1 is stored in the storage unit 12.

The subject information includes core data that is the source of the estimation data that is input to the estimation model M1, and auxiliary data that is auxiliary or incidental data. If the subject information is a patent or a utility model, the core data includes the claims, a notice of reasons for reject, and the search report from a patent search company. Namely, the gazette processing means 132 inputs the data for estimation generated for each subject information into the estimation model M1 and creates the gazette coefficient table 12d by associating the gazette coefficient e outputted from the estimation model M1 with the subject information.

Specifically, the gazette processing means 132 has a preprocessing function that generates the data for estimation by performing analysis processing on the core data of the subject information. The data for estimation is the data that is input to the estimation model M1 to estimate the validity of the contents of the gazette. The gazette processing means 132 has a function of performing natural language processing such as morphological analysis on the core data. Morphological analysis is the process of dividing the core data written in natural language into morphemes, which are the smallest linguistic units, and distinguishing the part of speech and changes in each morpheme.

The gazette processing means 132 generates the data for estimation by attaching information on parts of speech such as verbs, nouns, and adjectives to each morpheme divided from the core data and converting it into a distributed expression. The gazette processing means 132 has a function of deleting particles, auxiliary verbs when generating the data for estimation. When performing conversion processing on each morpheme, the gazette processing means 132 may extract key information that is a key to machine learning and may also perform weight processing on the extracted key information. Of course, the gazette processing means 132 may generate the data for estimation by performing a relatively simple analysis process such as deleting unnecessary data from the core data using the preprocessing function. Unnecessary data is, for example, characters such as numerical values, line breaks, or symbols that are of low importance for training the estimation model M1 and for calculations using the model.

The gazette processing means 132 may have a learning processing function that generates the estimated model M1 by machine learning based on core data. The gazette processing means 132 may use a learning processing function to update the estimated model M1 every arbitrary period such as one day. The gazette processing means 132 preferably generates the estimation model M1 by supervised learning using, for example, DNN (Deep Neural Network). The gazette processing means 132 may generate the estimation model M1 by unsupervised learning or semi-supervised learning. The gazette processing means 132 may generate the estimation model M1 by machine learning using GBDT (Gradient Boosting Decision Tree). The gazette processing means 132 may generate the estimation model M1 by a regression method such as linear regression, logistic regression, or decision tree. The gazette processing means 132 may generate the estimated model M1 using a classification method such as a random forest or a support vector machine. The gazette processing means 132 may generate the estimated model M1 using a method that combines the plurality of machine learning methods described above.

The gazette processing means 132 may have a translation processing function that unifies the core data into a preset common language. In this case, the gazette processing means 132 extracts core data for each subject information, and if the extracted core data is configured in a language other than the common language, translates the core data into the common language to generate translated data. Even if the core data includes a common language, if part of the core data includes a language other than the common language, the gazette processing means 132 performs a partial translation process to generate translated data.

When the gazette processing means 132 has a translation processing function, the gazette processing means 132 performs an analysis process on the translation data using the preprocessing function to generate the data for estimation to be input to the estimation model M1. If the gazette processing means 132 has the translation processing function and the learning processing function, the estimated model M1 is generated by machine learning based on the translation data. The gazette processing means 132 inputs the data for estimation generated for each subject information into the estimation model M1, and creates the gazette coefficient table 12d by associating the gazette coefficient e outputted from the estimation model M1 with the subject information.

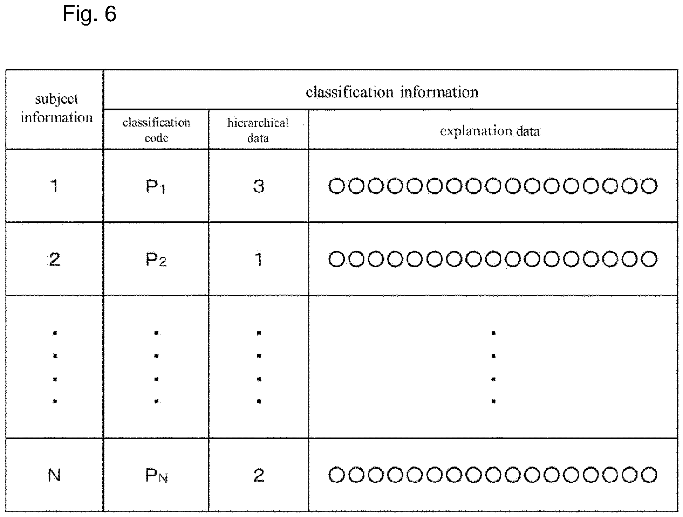

The classification processing means 133 extracts classification information having the configuration as illustrated in Fig. 6 from each subject information and the information providing server group 300. In Fig. 6, for convenience, classification codes are written as P1 to PN in association with the subject information 1 to N to differentiate them, but overlapping classification codes may exist. The representation of the hierarchical data in Fig. 6 is merely an example.

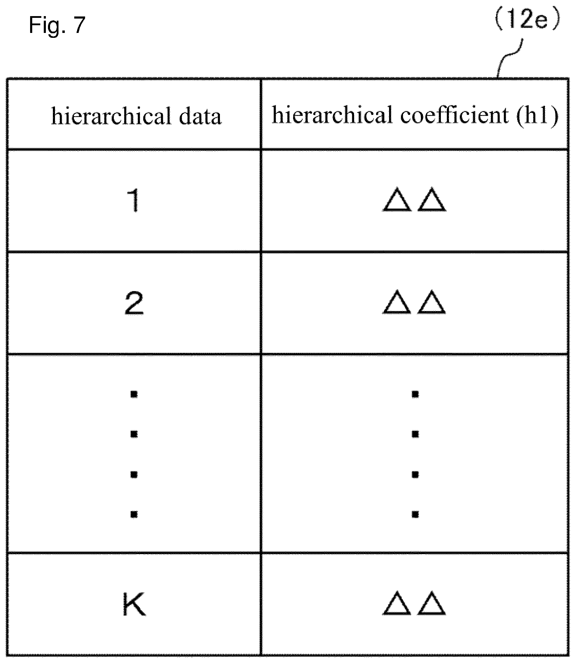

In Fig. 7, the hierarchical table 12e in which the hierarchical data and the hierarchical coefficient h1 are associated is schematically illustrated. The classification processing means 133 calculates the hierarchical coefficient h1 for each subject information by comparing the extracted the hierarchical data with the hierarchical table 12e. In Fig. 7, all the hierarchical coefficients h1 are set to " white triangle symbol" for convenience, but in the hierarchical table 12e, different hierarchical coefficients h1 are set for each hierarchical data. Of course, in the hierarchical table 12e, the same hierarchical coefficient h1 may be set for several different hierarchical data. The hierarchical coefficient h1 may be set in stages so that the hierarchical data of the lower layer is larger than the hierarchical data of the upper layer.

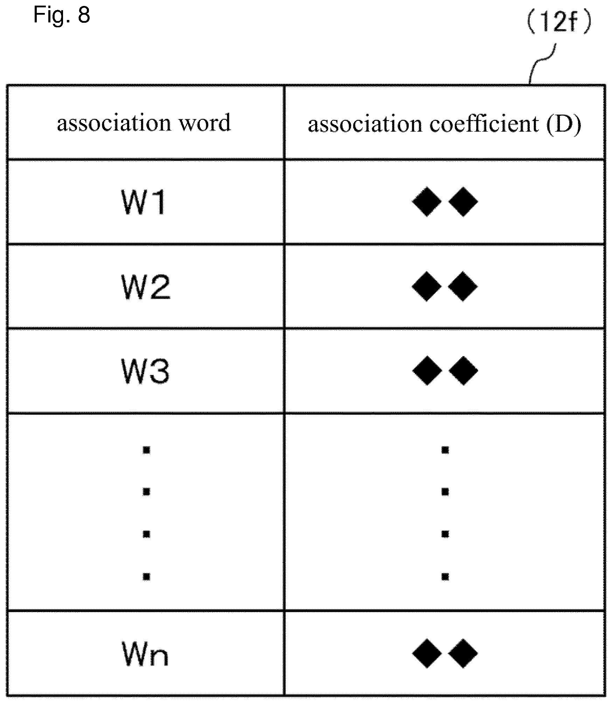

In Fig. 8, the word table 12f in which the association words W1 to Wn and the word coefficient D are associated is schematically illustrated. In Fig. 8, all word coefficients D are set to " black diamond symbol" for convenience, but in the word table 12f, different word coefficients D are set for each of several different association words W. Of course, in the word table 12f, the same word coefficient D may be set for several different association words W. The word coefficient D may be set to the same value as the association coefficient d, or may be set to a different value, or a part thereof may be set to the same value as the association coefficient d.

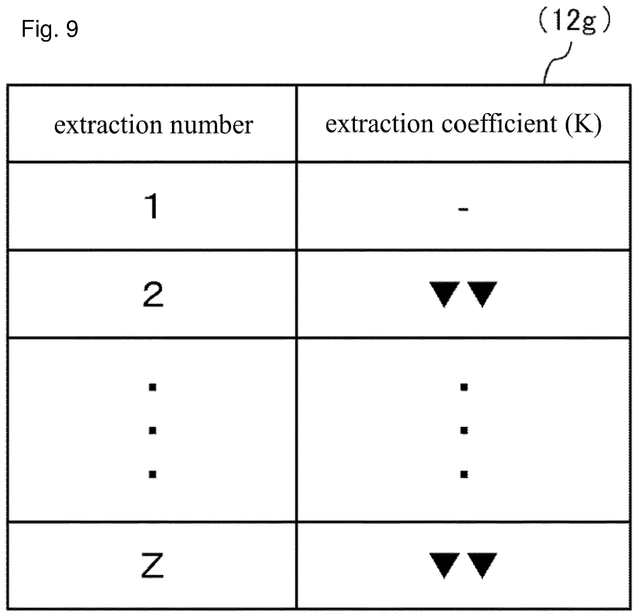

In Fig. 9, an extraction number table 12g, in which extraction numbers and extraction coefficients K are associated is schematically illustrated. The extraction number refers to the number of each association word W extracted from the explanation data (the number of each association word W included in the explanation data). The extraction coefficient K is used to absorb the influence that an unexpected increase in the number of extractions has on the classification score H. In Fig. 9, all extraction coefficients K are set to " black inverted triangle symbol" for convenience, but in the extraction number table 12g, different extraction coefficients K are set for each of several different extraction numbers. Of course, in the extraction number table 12g, the same extraction coefficient K may be set for several different extraction numbers.

The classification processing means 133 matches the extracted explanation data with each association word W of the association data 12a for each subject information, calculates an explanation coefficient h2 using the result of the matching, and stores the obtained explanation coefficient h2 in the storage unit 12. Specifically, the classification processing means 133 first extracts association words W from the explanation data, and calculates an explanation coefficient h2 based on the type and number of extracted association words W.

The classification processing unit 133, like the word processing unit 131 may extract words based on the degree of semantic matching with the association word W by natural language processing such as Word2Vec or Doc2Vec. For example, the classification processing means 133 performs morphological analysis on the explanation data and decomposes it into morphemes with part-of-speech information, then makes each morpheme a distributed representation, and compares these with a vector obtained by making the association word W into a distributed representation, it is preferable to extract those with a degree of match greater than a certain level.

[one-word extraction process] The classification processing means 133 extracts the word coefficient D by comparing one association word W only extracted from the explanation data with the word table 12f and this is stored in the storage unit 12 as the explanation coefficient h2.

[multiple-words extraction process] When a plurality of the same association words W are extracted from the explanation data, the classification processing means 133 compares the association words W with the word table 12f to obtain a word coefficient D and the extraction coefficient K is determined by comparing the extraction number, which is the number of extracted association words W, with the extraction number table 12g. Then, the classification processing means 133 obtains an explanation coefficient h2 based on the obtained word coefficient D and extraction coefficient K. For example, the classification processing means 133 sets the product of the word coefficient D and the extraction coefficient K as the explanation coefficient h2.

When a plurality of different association words Ware extracted from the explanation data, if the number of extracted association words W is 1, the classification processing means 133 derives the explanation element by using the calculation for the explanation coefficient h2 of the above-mentioned one-word extraction process. On the other hand, if a plurality of association words Ware extracted, the classification processing means 133 derives the explanation element coefficient by using the calculation for the explanation coefficient h2 of the above-mentioned multiple-words extraction process. Then, the classification processing means 133 uses the explanation element coefficients of each association word Wto derive an explanation coefficient h2.

The classification processing means 133 has a function of excluding subject information having explanation data for which no association word W has been extracted from the calculation targets of the classification score H. The classification processing means 133 may exclude from the calculation targets of the classification score H the subject information having explanation data from which only association words W having relatively low relevance to the management index are extracted. That is, there is also the subject information for which no classification score H is generated. Of course, in addition to the association words W, extraction words for explanation sentence extraction processing may be provided. In this case, there may be overlap between the extracted word and the association word W.

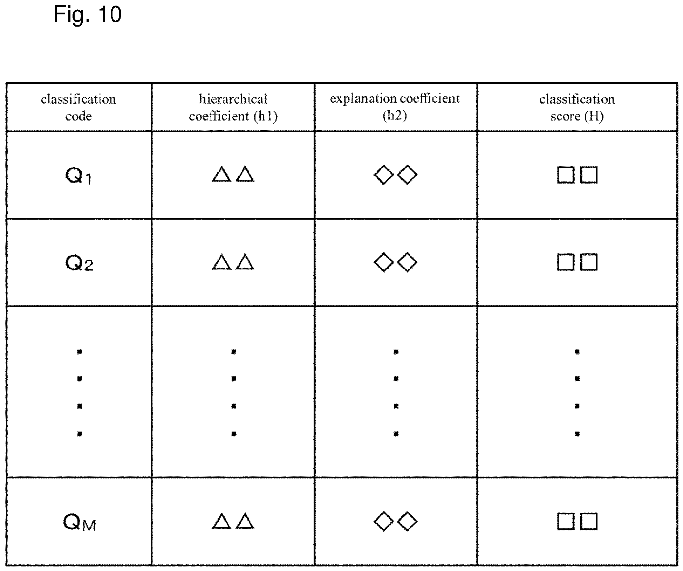

Fig. 10 shows an illustration of the classification codes Q1-QM, the hierarchical coefficient h1, the explanation coefficient h2, and the classification score H. In Fig. 10, the classification codes Q1 to QM are classification codes P1 to PN with parts of them excluded, or classification codes P1 to PN themselves. Namely, M is any natural number that satisfies the relationship "M^N". There may be some overlap among the classification codes Q1 to QM, like the classification codes P1 to PN.

The classification processing means 133 calculates a classification score H for each of the classification codes Q1 to QM using the hierarchy coefficient h1 and the explanation coefficient h2 and stores the calculated classification score H in the storage unit 12 in association with the subject information. For example, the classification processing means 133 sets the product of the hierarchical coefficient h1 and the explanation coefficient h2 as the classification score H. If multiple classification codes are assigned to the subject information, the classification score H may be determined for one representative classification code, or the classification score H may be determined by similarly determining the classification scores for each of the multiple classification codes. In this embodiment, the classification processing means 133 is configured to store a classification table 12h in which a plurality of classification codes and classification scores H are associated with each other in the storage unit 12. The classification score H is used when the rating processing means 134 calculates the subject score T.

The rating processing means 134 calculates the subject score T for each subject information, for example, by calculating the following formula (2). Namely, the rating processing means 134 is configured to obtain the subject score T for each subject information using the association score U, the classification score H, the classification coefficient g, the gazette coefficient e, and the citation coefficient f. The rating processing means 134 calculates the subject score T by setting H to 0 in the following formula (2) for the subject information for which the classification score H has not been generated.

$$T = \left( U + H \times g \right) \times e \times f \qquad \cdots (2)$$

The association score U is derived by the word processing means 131 and stored in the word table 12f. The classification score H is derived by the classification processing means 133 and stored in the classification table 12h. The gazette coefficient e is derived by the gazette processing means 132 and stored in the gazette coefficient table 12d. The citing coefficient f is stored in advance in the storage unit 12, for example, in a format such as a citing table (not shown) that associates the number of citations with the citing coefficient f. In this case, the rating processing means 134 calculates the citing coefficient f by comparing the citing information collected by the collection processing means 13a with the citing table.

Then, the rating processing means 134 calculates the evaluation score Ts for each company by taking the average of the subject scores T for each subject information, for example, as shown in equation (3) below. "m" in formula (3) is the number of the subject information corresponding to one company and may be 1 or 2.

$$T_S = \frac{T_1 + T_2 + \cdot \cdot \cdot + T_m}{m} \qquad \cdots (3)$$

The rating processing means 134 calculates the rating score by converting the evaluation score Ts into a stepwise expression by comparing the evaluation score Ts for each company with a plurality of threshold values set for rating. The rating score is expressed using codes such as "AAA", "AA", "A", "BBB", "BB", "B", "CCC", "CC", "C", and "D".

The rating processing means 134 constructs an evaluation database 120a that is an arrangement in which company information related to the subject information is associated with evaluation scores Ts and rating scores in the evaluation database unit 120. The evaluation database unit 120 is a storage device that stores an evaluation database 120a. The evaluation database unit 120 provides information in the evaluation database 120a to an external device such as the information terminal 80 or the rating server 110. The evaluation database unit 120 is composed of RAM, ROM, PROM such as flash memory, SSD, or HDD. Of course, the evaluation database section 120 may be provided outside the company evaluation device 10.

The control unit 13 can be configured by a computing device such as a CPU (Central Processing Unit) or a GPU (Graphics Processing Unit), and a company evaluation program P1 that cooperates with the computing device to realize the various functions described above. Namely, the company evaluation program P1 is a program that causes the control unit 13 and the storage unit 12 as a computer to function as the collection processing means 13a, the name identification processing means 13b, and the evaluation processing means 13c. The storage unit 12 corresponds to a computer-readable recording medium that records a company evaluation program. Of course, some of the various functions described above may be realized by hardware.

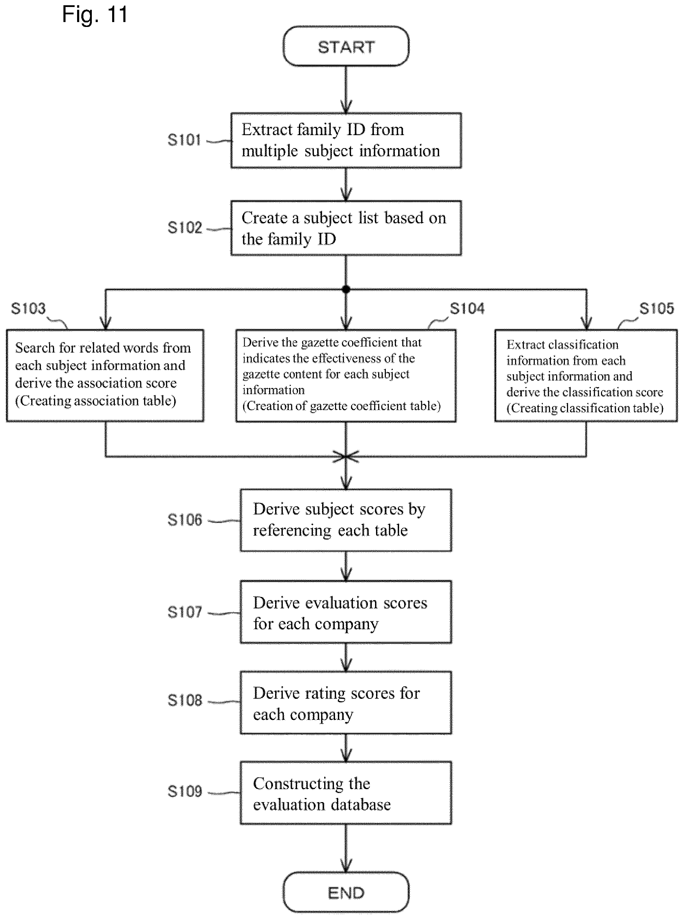

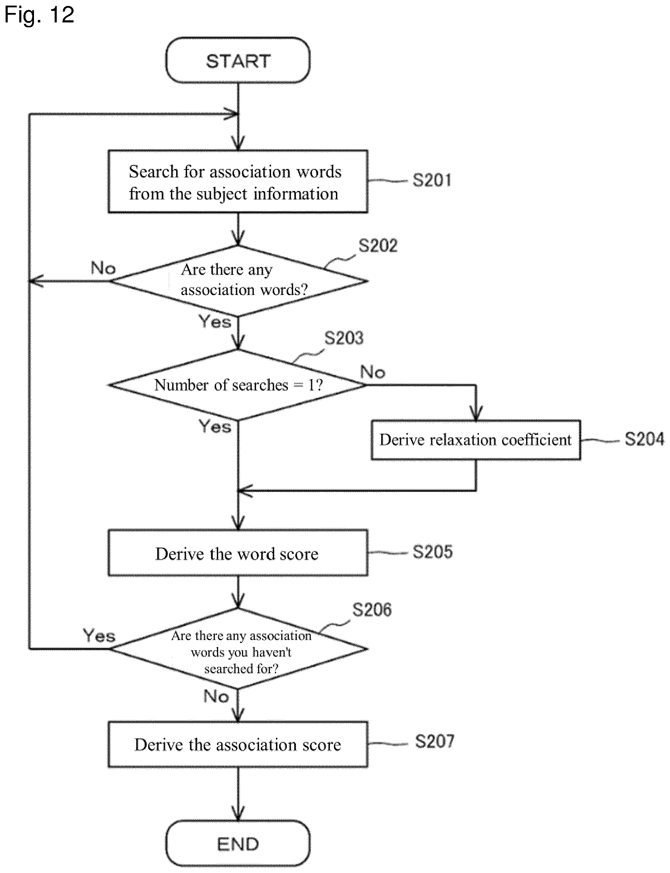

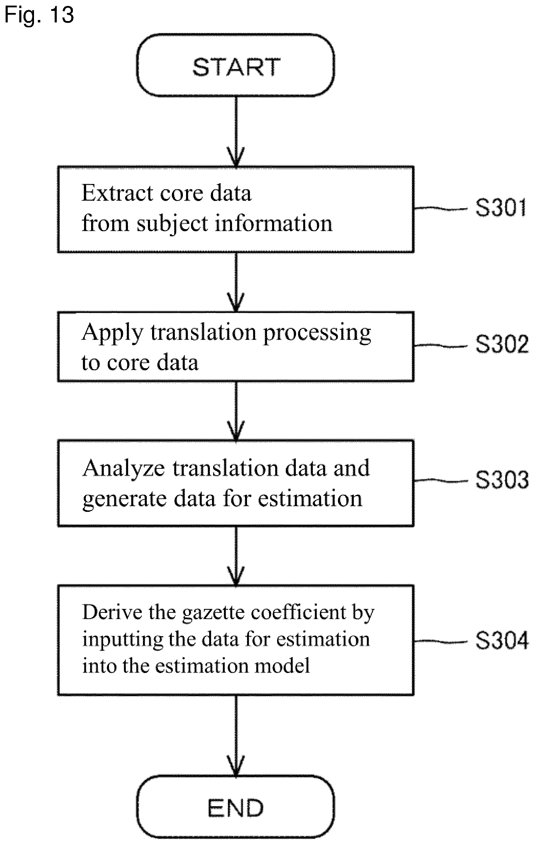

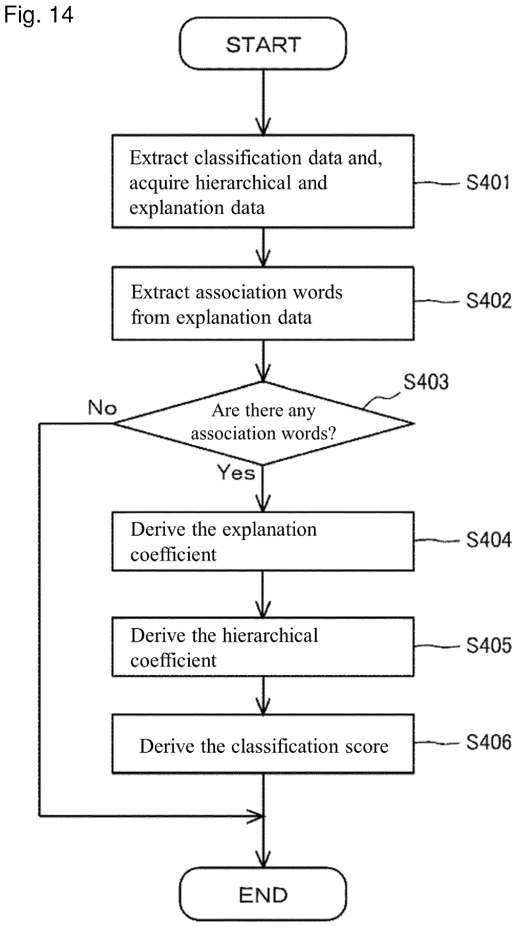

Next, referring to Fig. 11, an example of the overall processing flow of the company evaluation method in this embodiment is described. Note that the process in step S103 corresponds to the flowchart in Fig. 12, the process in step S104 corresponds to the process in Fig. 13, and the process in step S105 corresponds to the flowchart in Fig. 14.

[Name identification processing process] First, the name identification processing means 13b extracts the application number included in each of a plurality of the subject information, and the name and family ID linked to each of the application numbers (S S101). The name identification processing means 13b creates a list of application numbers and name based on the extracted family ID and creates the subject list 12b by associating unique common data with one or more name corresponding to the same company (Step S102).

[Evaluation processing process] (Word processing process)

The word processing means 131 searches for a plurality of association words W from each the subject information and obtains weight information linked to the association word W for each the subject information. Further, the word processing means 131 obtains the association score U for each subject information based on the number of searches and weight information of each association word W. Then, the word processing means 131 creates the association table 12c that associates the subject information with the association score U (Step S103).

(Gazette processing process)

The gazette processing means 132 creates the data for estimation for each subject information from the core data included in each subject information. Further, the gazette processing means 132 uses the created the data for estimation as input to the estimation model M1 to obtain the gazette coefficient e for each subject information. Then, the gazette processing means 132 creates the gazette coefficient table 12d that associates the subject information with the gazette coefficient e (Step S104).

(Classification processing process)

The classification processing means 133 extracts the classification information from each subject information and the information providing server group 300 and calculates the classification score H for each subject information based on the classification information. Then, the classification processing means 133 creates the classification table 12h that associates the subject information with the classification score H (Step S105).

(Rating processing process)

Next, for each subject information, the rating processing means 134 reads out the association score U from the association table 12c, reads out the gazette coefficient e from the gazette coefficient table 12d, reads out the classification score H from the classification table 12h, and reads out the classification coefficient g and the citing coefficient f from the storage unit 12. Then, the rating processing means 134 calculates the subject score T by calculation such as equation (2) based on each of the read-out information (Step S106).

The rating processing means 134 refers to the subject list 12b in which each company is organized based on the family ID and organizes the subject scores T for each company. Then, the rating processing means 134 calculates the evaluation score Ts for each company by such as equation (3) (Step S107). The rating processing means 134 determines the evaluation score Ts in stages and obtains the rating score for each company (Step S108). Finally, the rating processing means 134 constructs the evaluation database 120a that associates company information regarding subject information with evaluation scores Ts and rating scores (Step S109).

It is not necessary to perform each process in steps S103 to S105 in the order of step numbers. Namely, the order of each process in steps S103 to S105 may be changed as appropriate or may be executed in parallel.

Next, referring to Fig. 12, an example of the operation in the word processing step of the company evaluation method of this embodiment is specifically described. Here, the operation of obtaining the association score U for one subject information is explained.

The word processing means 131 searches for one association word W from the subject information (Step S201). If the association word W is not searched (Step S202/No), the word processing means 131 starts search processing for other association words W that have not been searched (Step S201).

When the association word W is searched (Step S202/Yes), if the number of searches is two or more (Step S203/No), the word processing means 131 calculates a relaxation coefficient by comparing the number of searches with the relaxation table (Step S204). Then, the word processing means 131 obtains a value obtained by multiplying the location coefficient, the association coefficient d, and the product of the number of searches and the relaxation coefficient as the word score (Step S205). On the other hand, if the number of searches is 1 (Step S203/Yes), the word processing means 131 calculates a value obtained by multiplying the location coefficient and the association coefficient d as the word score (Step S205).

If there is the association word W that has not been searched (Step S206/Yes), the word processing means 131 repeats the series of processes from steps S201 to S206. When the word processing means 131 completes the search process for all association words W (Step S206/No), the word processing means 131 sums all the word scores obtained to obtain the association score U (Step S207). The word processing means 131 executes a series of processes of steps S201 to S207 for all subject information.

Next, referring to Fig. 13, an operational example related to derivation of the gazette coefficient e in the gazette processing process of the company evaluation method of this embodiment is specifically described. Here, the operation of calculating the gazette coefficient e for one subject information is explained.

The gazette processing means 132 extracts core data from the subject information (Step S301). The gazette processing means 132 translates the core data into a common language to generate translation data (Step S302). The gazette processing means 132 generates the data for estimation by subjecting the translated data to analysis processing such as natural language processing (Step S303). Then, the gazette processing means 132 derives the gazette coefficient e, which is the output value of the estimation model M1, by inputting the data for estimation to the estimation model M1 (Step S304).

Next, referring to Fig. 14, an example of the operation of the classification processing process in the company evaluation method of this embodiment is specifically described. Here, the operation of determining the classification score H for one subject information is explained.

The classification processing means 133 extracts the classification information from the subject information and acquires hierarchical data and explanation data linked to the extracted classification information from the information providing server group 300. The hierarchical data may be derived from the configuration of classification information (Step S401). The classification processing means 133 performs extraction processing for a plurality of association words W on the acquired descriptive data (Step S402). If all the association words Ware not in the explanation data (Step S403/No), the classification processing means 133 ends the processing for the subject information without calculating the classification score H.

If there is at least one association word W in the explanation data (Step S403/Yes), the classification processing means 133 calculates an explanation coefficient h2 based on the type and number of extracted association words W. Namely, for the association word W that exists only one in the explanation data, the classification processing means 133 extracts a word coefficient D by comparing the extracted association word W with the word table 12f and stores it as the explanation coefficient h2 in the storage unit 12. For a plurality of association words W in the explanation data, the classification processing means 133 derives the word coefficient D by comparing the association words W with the word table 12f and derives the extraction coefficient K by comparing the number of extracted association words W with the extraction number table 12g. Then, the classification processing means 133 obtains the explanation coefficient h2 by multiplying the word coefficient D and the extraction coefficient K (Step S404).

The classification processing means 133 derives the hierarchical coefficient h1 by comparing the obtained hierarchical data with the hierarchical table 12e (Step S405). When only one type of association word W is extracted, the classification processing means 133 derives the classification score H using the hierarchical coefficient h1 and explanation coefficient h2 of the association word W. When a plurality of types of association words W are extracted, the classification processing means 133 derives the hierarchical coefficient h1 and the explanation coefficient h2 of each association word W and derives the classification score H by using these h1 and h2 (Step S406).

As described above, the company evaluation device 10 in this embodiment derives evaluation results of companies by using weight information that reflects the degree of relevance of one or more rights-related information linked to a company to the management indicators. Therefore, it is possible to evaluate companies that incorporate the perspective of industrial property rights. Here, since industrial property rights are examined by the patent offices of each country, registered rights are recognized to have objective utility. Furthermore, even at the application stage, applicants generally prepare application documents with an eye toward ensuring their usefulness from an objective perspective, assuming that the application will be examined. Therefore, evaluation results based on information regarding industrial property rights naturally provide highly objective information. Therefore, according to the company evaluation device 10, it is possible to objectively evaluate companies from the viewpoint of management indicators and derive highly reliable evaluation results.

The company evaluation device 10 can provide evaluation results of companies to rating agencies. The company evaluation results may be downloaded to the rating server 110 or may be printed out on paper and provided. The company evaluation device 10 may provide the evaluation results of company in a data file such as a MICROSOFT EXCEL (registered trademark) XLS file, a CSV (Comma-Separated Values) file, or a text file. The rating agency can improve the objectivity and reliability of the company evaluation by incorporating the evaluation results of company by the company evaluation device 10 into a unique analysis result.

By the way, corporate evaluations related to management indicators such as ESG have issues such as insufficient legal frameworks, difficulty in evaluating creative aspects, possibility of window dressing, and difficulty in setting evaluation indicators common to all industries. In this respect, the evaluation results by the company evaluation device 10 reflect the content of information regarding industrial property rights mediated by the legal institutions of the patent offices of each country, where creativity is also required to acquire industrial property rights. Furthermore, the examination process at the patent offices of each country is transparent, and there is no possibility of window dressing. In other words, the evaluation results obtained by the company evaluation device 10 are information based on the reliability of application documents related to industrial property rights and the examining organizations thereof, so that the above-mentioned conventional issues can be solved.

The evaluation processing means 13c searches for a plurality of association words W related to a management indicator from one or more rights-related information linked to a company and the evaluation result of the company is obtained using the weight information linked to the searched association word W. The evaluation processing means 13c may use the association coefficient d set to at least one of the pluralities of association words W as the weight information linked to the association word W. Thereby, the difference in the relevance of each association word Wto the management indicator is reflected in the evaluation results of the company so that the accuracy of the evaluation results can be improved. Of course, the association coefficient d may be set individually for all association words W.

The evaluation processing means 13c may use the number of searches for the association word Was the weight information linked to the association word W. The evaluation processing means 13c may calculate the subject score T using the number of searches as is, but it may also use a value obtained by converting the number of searches by setting an upper limit value, setting a relaxation coefficient, or a combination of these. Thereby, it is possible to prevent the reliability of evaluation results from decreasing due to an unexpected increase in the number of searches.

The evaluation processing means 13c may use the location coefficients that reflect the location where the association word W is written as the weight information linked to the association word W. The location coefficient is configured to include the specification coefficient a corresponding to the specification, the abstract coefficient b corresponding to the abstract and set larger than the specification coefficient a, and the claim coefficient c corresponding to the claims and set larger than the abstract coefficient b. In this way, it is possible to reflect differences in the importance of each submitted document related to a patent application in the company evaluation results, thereby improving reliability.

The evaluation processing means 13c may derive the evaluation result of the company using the gazette coefficient e that reflects the degree of effectiveness of the contents of the gazette. In this way, the objective effectiveness of the contents of the gazette regarding the subject information can be reflected in the evaluation results, which further increases the objectivity of the evaluation results. The evaluation processing means 13c may derive the evaluation result of the company using the classification score H set for each classification code. In this way, the degree of relationship with potential management indicators in the classification code can be incorporated into the evaluation results of the company, making it possible to evaluate companies from the perspective of management indicators with even higher precision.

For each classification code hierarchy, the classification score H may include, as an element, the hierarchical coefficient h1 that is set in stages so that the lower layer is larger than the upper layer. In this way, the lower layers associated with the more essential contents of the application documents have a relatively greater weight, thereby increasing the reliability of the evaluation results. The classification score H may include as an element the explanation coefficient h2 based on the content of the explanation text of the classification code. In this way, the presence or absence of a term related to a management indicator in the explanation text can be considered in the evaluation results of a company, so that evaluation accuracy can be improved. The evaluation processing means 13c may derive the explanation coefficient h2 by machine learning using analysis processing, like the method for deriving the gazette coefficient e.

Further, the company evaluation device 10 has the name identification processing means 13b that accesses the intellectual property database and extracts the application numbers included in the multiple rights-related information to be listed, as well as the name and family ID linked to each application number. The name identification processing means 13b is configured to organize the application numbers and names based on the extracted family ID and create the subject list 12b. More specifically, the name identification processing means 13b groups the name groups for each company based on the commonality and similarity of the names constituting each of the plurality of name groups and creates the subject list 12b by assigning unique common data to each name. Here, the family ID is identification information commonly given to patent families, and the same family ID is given to the same company no matter how far apart the company names are written. Therefore, the company evaluation device 10 can achieve highly accurate name identification processing regardless of the degree of similarity between company names, so that categorization of each company can be performed with high accuracy.

<Modified example>

In the above, an example is described in which the classification processing means 133 calculates the classification score H each time when calculating the subject score T, including without limitation. For example, the storage unit 12 may store in advance the classification table 12h that associates classification codes in which explanation contains association word W or extracted word with the classification scores H.

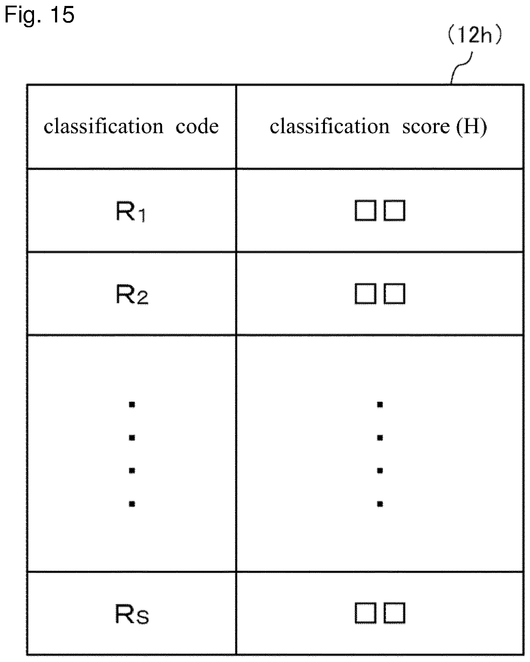

Fig. 15 shows an example of a classification table that associates the classification codes R1 to RS (S is an arbitrary natural number) whose explanation sentences include association words W or extracted words with the classification scores H derived by the classification processing means 133 in the same manner as described above. The other configurations are the same as those described above and will therefore be omitted.

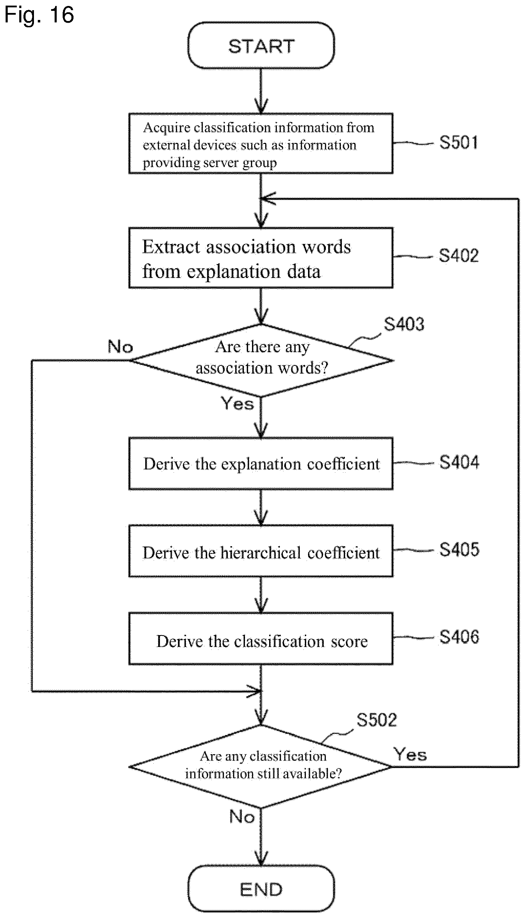

Referring to Fig. 16, an operational example of the method for creating the classification table 12h in this modification will be described. The same step numbers are assigned to the steps equivalent to those in Fig. 14 described above, and the description thereof is omitted. Here, an example using the association word W will be described.

The classification processing means 133 acquires a plurality of classification information from the information providing server group 300 (Step S501). Next, the classification processing means 133 performs extraction processing for a plurality of association words W from the explanation data included in any classification information (Step S402). If at least one association word W exists in the explanation data (Step S403/Yes), the classification processing means 133 calculates the explanation coefficient h2 based on the type and number of extracted association words W (Step S404).

Next, the classification processing means 133 compares the acquired hierarchical data with the hierarchical table 12e to derive the hierarchical coefficient h1 (Step S405). Then, the classification processing means 133 derives the classification score H using the hierarchical coefficient h1 and the explanation coefficient h2 of the extracted association word Wand stores the derived classification score H in the storage unit 12 in association with the classification code (Step S406). The classification processing means 133 determines whether there is any classification information that has not been subjected to extraction processing (Step S502).

If all the association words W for extraction processing are not in the explanation data (Step S403/No), the classification processing means 133 determines whether there is any classification information for which the classification score H is not calculated and the extraction process has not been performed for the classification information linked to the explanation data (Step S502). As long as there is classification information that has not been extracted (Step S502/Yes), the classification processing means 133 executes a series of processes from steps S402 to S406 to update the database regarding the classification table 12h. When the classification processing means 133 completes the extraction processing of all classification information (Step S502/No), the classification processing means 133 ends the creation processing of the classification table 12h.

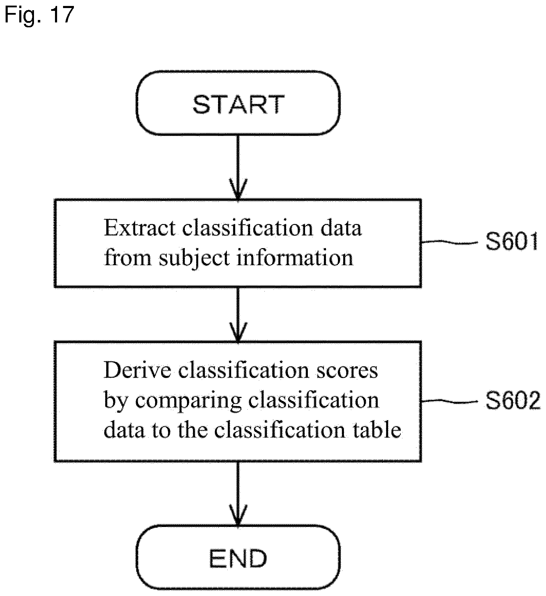

Next, referring to Fig. 17, an example of the operation in the classification processing step of the company evaluation method of this modification is described. Here, the operation of determining the classification score H for one subject information is explained.

The classification processing means 133 extracts the classification code from the subject information (Step S601). The classification processing means 133 calculates the classification score H by comparing the extracted classification code with the classification table 12h. When the classification processing means 133 extracts a plurality of classification codes in step S601, it may calculate the classification score H by comparing one classification code with a preset high priority to the classification table 12h. In the same case, the classification processing means 133 compares a plurality of preset high-priority classification codes with the classification table 12h and obtains each classification score H, the classification score H for the subject information may be determined by a predetermined calculation using these classification scores H. Of course, in the same case, the classification processing means 133 may compare all the extracted classification codes with the classification table 12h, obtain each classification score H, and calculate the classification score H for the subject information by a predetermined calculation using these classification scores H.

As described above, in the company evaluation device 10 according to this modification, the classification table 12h in which classification codes and classification scores H are associated is stored in advance in the storage unit 12. Therefore, the classification processing means 133 can quickly determine the presence or absence of the classification score H by comparing the classification code with the classification table 12h, and the stored classification score H is extracted. Therefore, it is possible to speed up the calculation processing regarding the evaluation results of the company. The classification table 12h may be provided to a PC or a server via the network N. In this case, the classification table 12h may be provided as a data file such as a MICROSOFT EXCEL (registered trademark) XLS file, CSV (Comma-Separated Values) file, or text file. Of course, the classification table 12h may be printed out on paper.

The embodiments described above are specific examples of the company evaluation device, the company evaluation program, the recording medium, and the company evaluation method, and the technical scope of the present disclosure is not limited to these aspects. For example, the above formula (1) is merely an example of the calculation formula for calculating the association score U, and various modifications are possible, and the configuration of the company evaluation program is also changed accordingly. The word processing means 131 may use any one or two of the location coefficients, the association coefficient dk, and the number of searches to calculate the association score U. Namely, the weight information may include at least one of the location coefficients, the association coefficient dk, and the number of searches.

The classification processing means 133 may derive the classification score H without using the extraction coefficient K. Namely, the weight information may be configured without including the extraction coefficient K. In the above, an example is described in which the classification score H includes both the hierarchical coefficient h1 and the explanation coefficient h2, including without limitation. The classification processing means 133 may use the hierarchical coefficient h1 as the classification score H, or may use the explanation coefficient h2 as the classification score H. Namely, the weight information may be configured to include at least one of the hierarchical coefficients h1 and the explanation coefficient h2. Note that the classification processing means 133 does not need to acquire hierarchical data when the hierarchical coefficient h1 is not used and does not need to acquire explanation data when the explanation coefficient h2 is not used.

In the above equation (2), an example is described in which the classification coefficient g is used to calculate the subject score T, the rating processing means 134 may calculate the subject score T without using the classification coefficient g. Namely, the weight information may be configured without including the classification coefficient g. The rating processing means 134 may derive the subject score T without using the citing coefficient f. Namely, the weight information may be configured without including the citing coefficient f. The rating processing means 134 may derive the subject score T without using the gazette coefficient e. Namely, the weight information may be configured without including the gazette coefficient e, and in this case, the gazette processing means 132 becomes unnecessary. The rating processing means 134 may derive the subject score T without using the classification score H. Namely, the weight information may be configured without including the classification score H, and in this case, the classification processing means 133 becomes unnecessary. The rating processing means 134 may derive the subject score T without using the association score U. Namely, the weight information may be configured without including the association score U, and in this case, the word processing means 131 becomes unnecessary.

REFERENCE SIGNS LIST

10: company evaluation device
11: communication unit
12: storage unit
12a: association data
12b: subject list
12c: association table
12d: gazette coefficient table
12e: hierarchical table
12f: word table
12g: extraction table
12h: classification table
13: control unit
13a: collection processing means
13b: name identification processing means
13c: evaluation processing means
40: information terminal
50: management terminal
80: information terminal
100: rating server group
110: rating server
120: evaluation database unit
120a: evaluation database
131: word processing means

132: gazette processing means
133: classification processing means
134: rating processing means
200: company evaluation system
300: information providing server group
D: word coefficient
H: classification score
K: extraction coefficient
M1: estimation model
N: network
P1: company evaluation program
T: subject score
Ts: evaluation score
U: association score
W: association word
a: specification coefficient
b: abstract coefficient
c: claim coefficient
d: association coefficient
e: gazette coefficient
f: citing coefficient
g: classification coefficient
h1: hierarchical coefficient
h2: explanation coefficient

## Claims

1. A company evaluation device comprising: an evaluation processing means, and
wherein the evaluation processing means is configured to derive an evaluation result of company using weight information that reflects in corporate evaluation the degree of relevance of information regarding one or more industrial property rights linked to the company to management indicators incorporated in the management policy of the company.

2. The company evaluation device according to claim 1, comprising:
wherein the evaluation processing means is configured to search for a plurality of association words related to the management indicator from information related to one or more industrial property rights linked to the company and derive the evaluation result of company using the weight information linked to the searched association words.

3. The company evaluation device according to claim 2, comprising:
wherein the evaluation processing means is configured to use an association coefficient set to at least one of a plurality of association words as the weight information linked to the association word.

4. The company evaluation device according to claim 2, comprising:
wherein the evaluation processing means is configured to use number of searches for the association words as the weight information linked to the association words.

5. The company evaluation device according to claim 2, comprising:
wherein the evaluation processing means is configured to use a location coefficient that is set according to the location of the association words as the weight information linked to the association words.

6. The company evaluation device according to claim 5, comprising:

wherein the industrial property right is a patent right or a utility model right, and
wherein the location coefficient is configured to include a specification coefficient corresponding to the specification, an abstract coefficient corresponding to the abstract and set larger than the specification coefficient, and a claim coefficient corresponding to the claims and set larger than the abstract coefficient.

**7.** The company evaluation device according to claim 1, comprising:

wherein the industrial property right is a patent right or a utility model right, and
wherein the evaluation processing means is configured to derive the evaluation results using a gazette coefficient that is set according to the effectiveness of the contents of the gazette.

**8.** The company evaluation device according to claim 1, comprising:

wherein the industrial property right is a patent right or a utility model right, and
wherein the evaluation processing means is configured to derive the evaluation results using a classification score, as the weight information, set for each classification code in the patent classification having a hierarchical structure of a plurality of classification codes.

**9.** The company evaluation device according to claim 8, comprising:
wherein the classification score is configured to be the hierarchical coefficient that is set in stages so that the lower layer is larger than the upper layer for each layer of the classification code.

**10.** The company evaluation device according to claim 8, comprising:

wherein the classification code is linked to the explanation text, and
wherein the classification score is configured to have the explanation coefficient based on the content of the explanation text as an element.

**11.** A method of company evaluation comprising:
deriving the company evaluation using weight information that reflects in corporate evaluation the degree of relevance of information regarding one or more industrial property rights linked to a company to management indicators incorporated in the management policy of the company.

Fig. 1

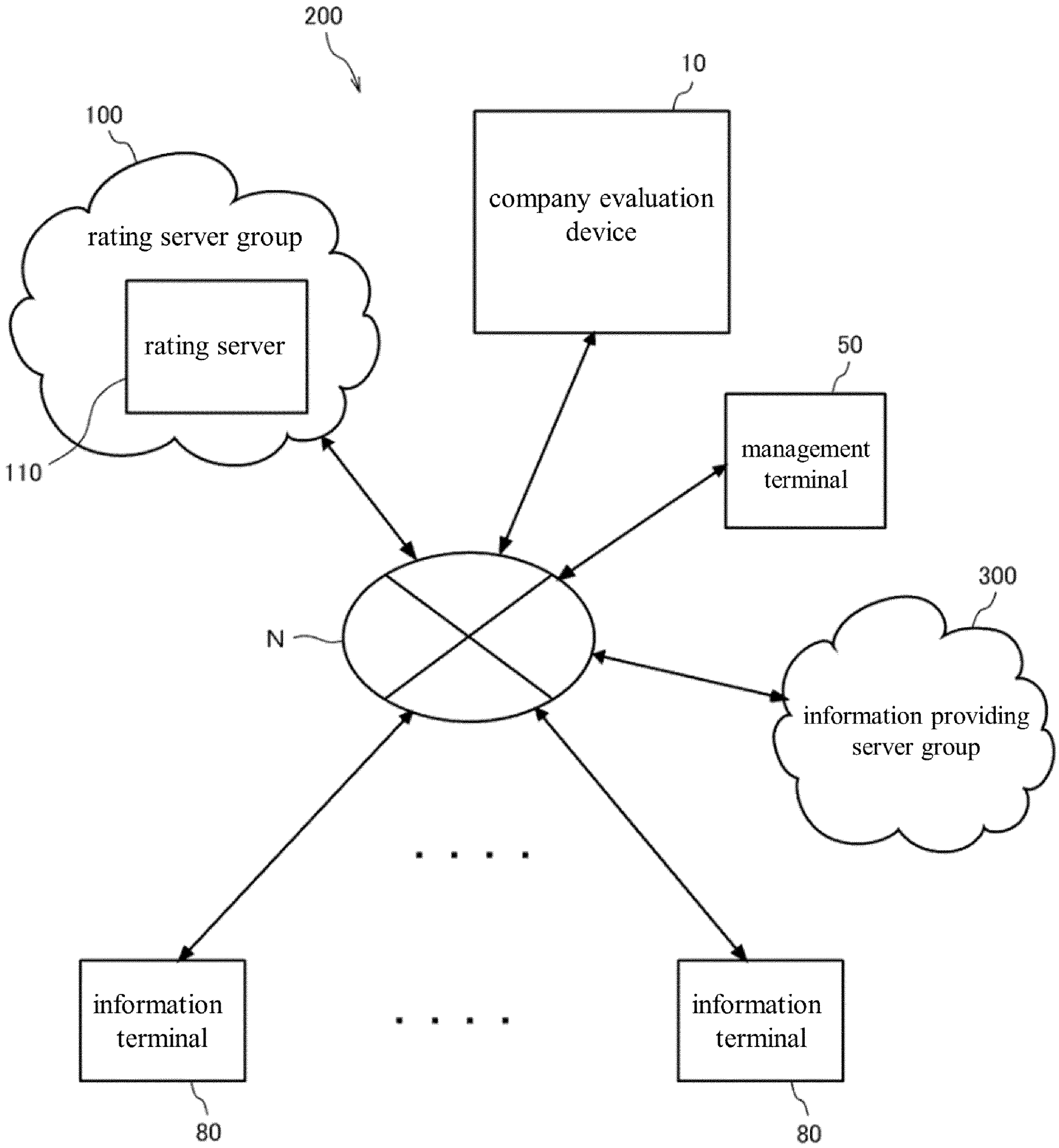
200
10
100
company evaluation device
rating server group
rating server
110
50
management terminal
300
N
information providing server group
information terminal
information terminal
80
80

Fig. 2

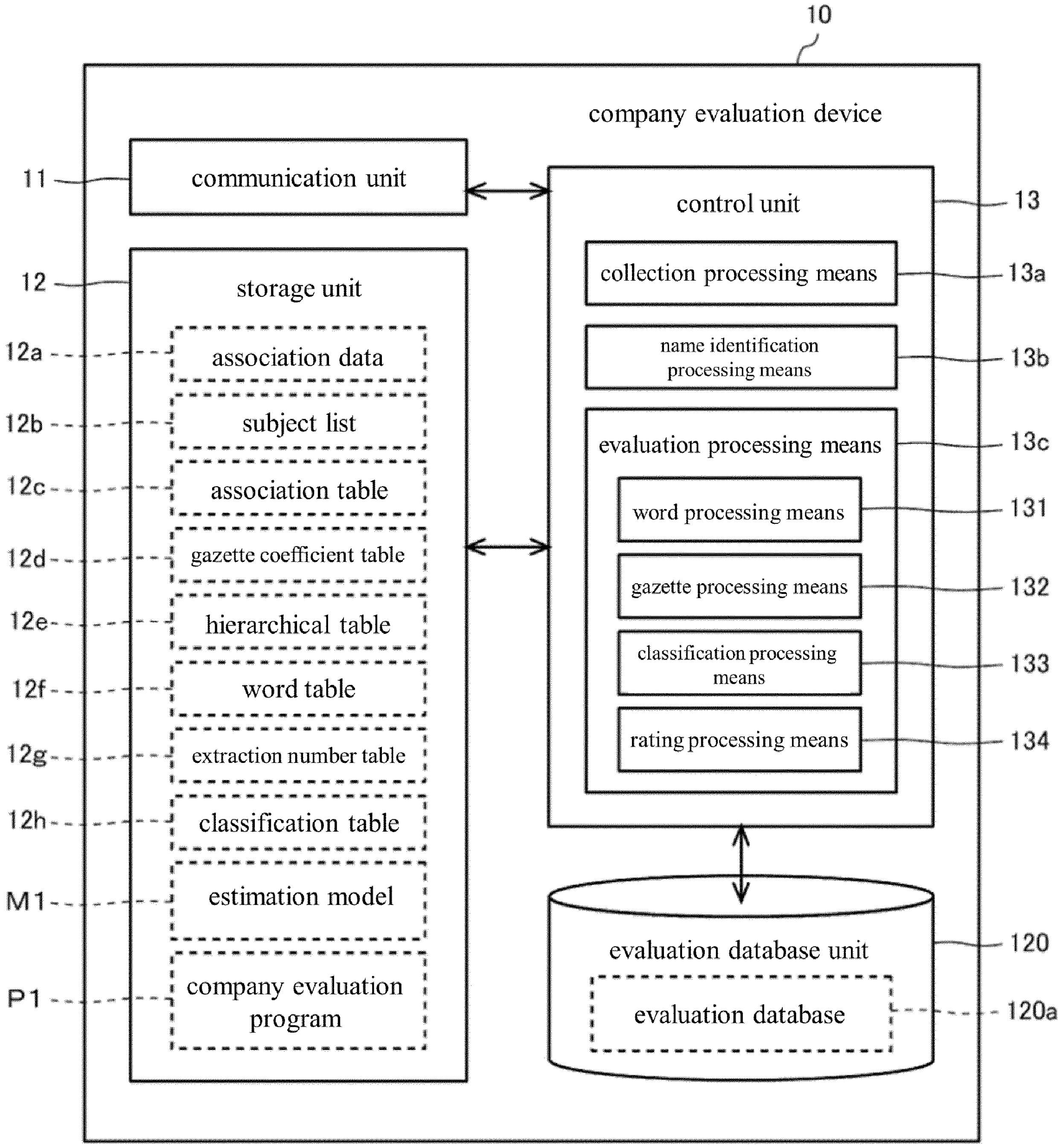
10
company evaluation device
11
communication unit
control unit
13
collection processing means
13a
name identification processing means
13b
evaluation processing means
13c
word processing means
131
gazette processing means
132
classification processing means
133
rating processing means
134
12
storage unit
12a
association data
12b
subject list
12c
association table
12d
gazette coefficient table
12e
hierarchical table
12f
word table
12g
extraction number table
12h
classification table
M1
estimation model
P1
company evaluation program
evaluation database unit
120
evaluation database
120a

Fig. 3

| common data | application number | applicant name | family ID |
|---|---|---|---|
| 1 1 1 1 | □□□□□□ | ○○○○ Co.Ltd. | $F_1$ |
| 1 1 1 1 | □□□□□□ | ○○○○ | $F_1$ |
| 1 1 1 1 | □□□□□□ | ○○○○ G | $F_1$ |
| 1 1 1 1 | □□□□□□ | ○○○○ K | $F_1$ |
| 1 1 1 1 | □□□□□□ | △△△ Co | $F_1$ |
| 1 1 1 1 | □□□□□□ | ○○○○ A | $F_1$ |
| 2 2 2 2 | □□□□□□ | ××× Inc | $F_2$ |
| ⋮ | ⋮ | ⋮ | ⋮ |
| N N N N | □□□□□□ | ○○○○ Inc | $F_N$ |

Fig. 4

| | association word | W1 ($d_1$) | W2 ($d_2$) | W3 ($d_3$) | ・・・ | Wn ($d_n$) |
|---|---|---|---|---|---|---|
| subject information 1 | specification (a) | $X_1$ | $X_2$ | $X_3$ | ・・・ | $X_n$ |
| | abstract (b) | $Y_1$ | $Y_2$ | $Y_3$ | ・・・ | $Y_n$ |
| | claim (c) | $Z_1$ | $Z_2$ | $Z_3$ | ・・・ | $Z_n$ |
| (e) (f) | classification coefficient (g) | H | | | | |

W1– Wn : association word / $d_1 - d_n$ : association coefficient (weight coefficient. of association word)

a : specification coefficient (weight coefficient of specification) / $X_1 - X_n$ : number of searches for association word in the specification)

b : abstract coefficient (weight coefficient of abstract) / $Y_1 - Y_n$ : number of searches for association word in the abstract)

c : claim coefficient (weight coefficient of claim) / $Z_1 - Z_n$ : number of searches in the claims

e : gazette coefficient / f : citing coefficient / H : classification score / g : classification coefficient

Fig. 5

| gazette coefficient (e) | gazette type (code) | explanation |
|---|---|---|
| $e_1$ | Patents (B, B1, B2,etc.) | Patents that multiple patent offices have recognized as novelty and inventive steps and companies are required to request for examination at a large cost. |
| $e_2$ | published patents (A, etc.) | Patents that have not yet been requested for examination, have expired, or have been withdrawn, and have relatively high validity. |
| $e_3$ | published patents utility models (A, U, etc.) | Patents and utility models that have not yet been requested for examination, have expired, have been withdrawn, and have relatively low validity. |
| $e_4$ | published patents utility models (A, U, etc.) | Patents and utility models that have not yet been requested for examination, have expired, have been withdrawn, and have extremely low validity. (Includes malicious applications) |

Fig. 6

| subject information | classification information | | |
|---|---|---|---|
| | classification code | hierarchical data | explanation data |
| 1 | $P_1$ | 3 | ○○○○○○○○○○○○○○○○○ |
| 2 | $P_2$ | 1 | ○○○○○○○○○○○○○○○○○ |
| ⋮ | ⋮ | ⋮ | ⋮ |
| N | $P_N$ | 2 | ○○○○○○○○○○○○○○○○○ |

Fig. 7

(12e)

| hierarchical data | hierarchical coefficient (h1) |
|---|---|
| 1 | △△ |
| 2 | △△ |
| ⋮ | ⋮ |
| K | △△ |

Fig. 8

(12f)

| association word | association coefficient (D) |
|---|---|
| W1 | ◆◆ |
| W2 | ◆◆ |
| W3 | ◆◆ |
| ⋮ | ⋮ |
| Wn | ◆◆ |

Fig. 9

(12g)

| extraction number | extraction coefficient (K) |
|---|---|
| 1 | - |
| 2 | ▼▼ |
| ⋮ | ⋮ |
| Z | ▼▼ |

Fig. 10

| classification code | hierarchical coefficient (h1) | explanation coefficient (h2) | classification score (H) |
|---|---|---|---|
| $Q_1$ | △△ | ◇◇ | □□ |
| $Q_2$ | △△ | ◇◇ | □□ |
| ⋮ | ⋮ | ⋮ | ⋮ |
| $Q_M$ | △△ | ◇◇ | □□ |

Fig. 11

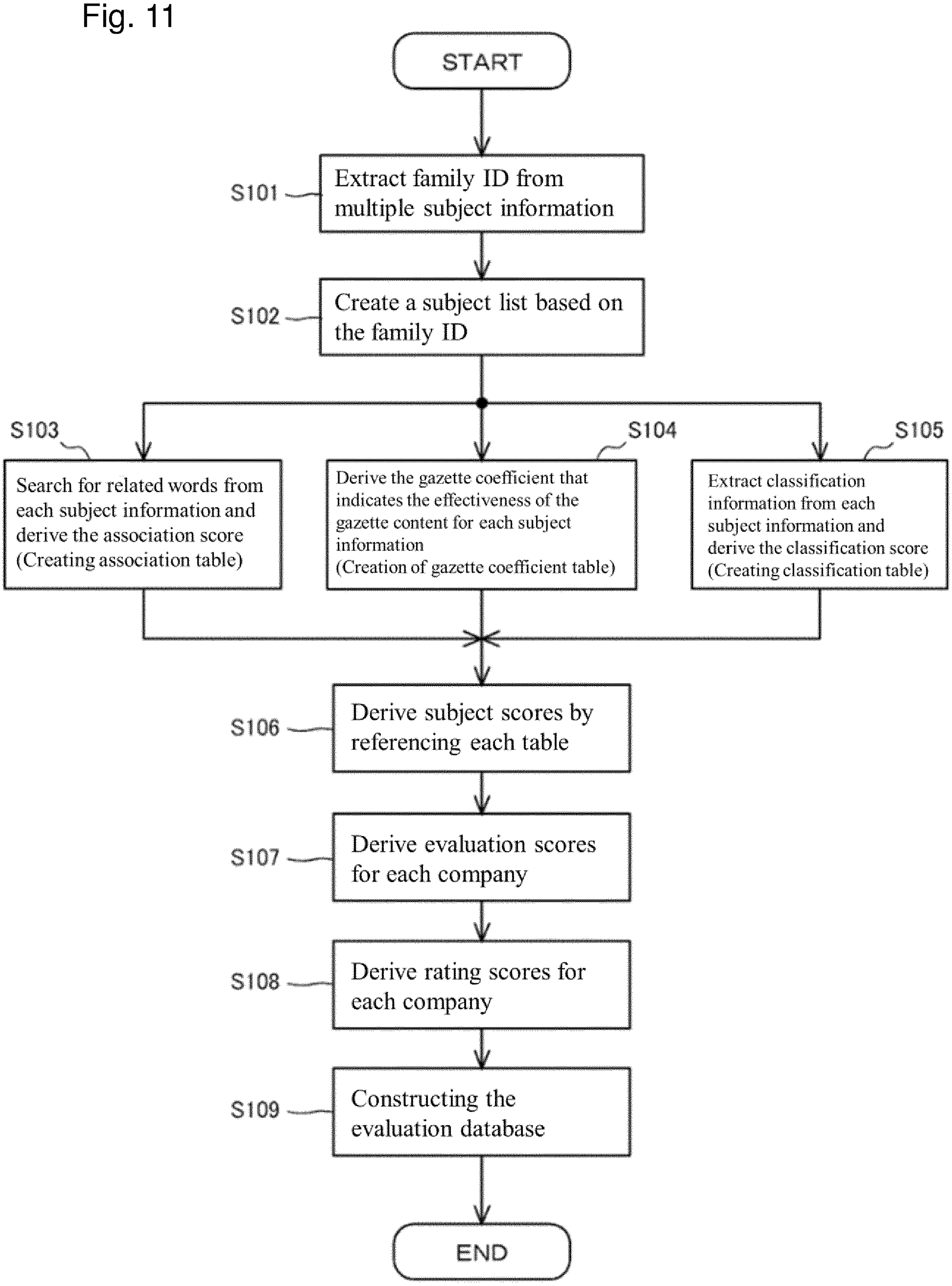
START
S101
Extract family ID from multiple subject information
S102
Create a subject list based on the family ID
S103
Search for related words from each subject information and derive the association score (Creating association table)
S104
Derive the gazette coefficient that indicates the effectiveness of the gazette content for each subject information (Creation of gazette coefficient table)
S105
Extract classification information from each subject information and derive the classification score (Creating classification table)
S106
Derive subject scores by referencing each table
S107
Derive evaluation scores for each company
S108
Derive rating scores for each company
S109
Constructing the evaluation database
END

Fig. 12

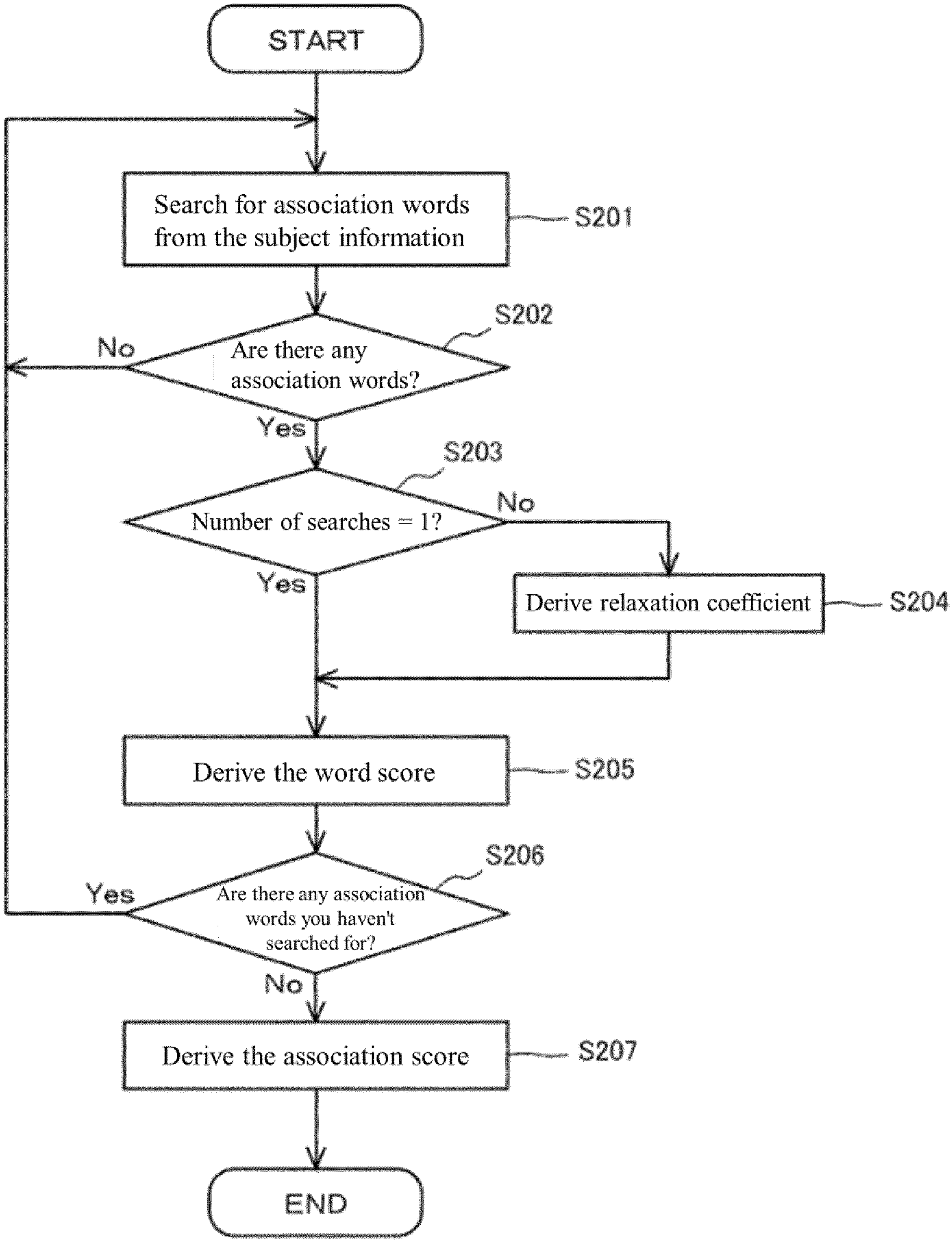
START
Search for association words from the subject information
S201
Are there any association words?
S202
No
Yes
Number of searches = 1?
S203
No
Yes
Derive relaxation coefficient
S204
Derive the word score
S205
Are there any association words you haven't searched for?
S206
Yes
No
Derive the association score
S207
END

Fig. 13

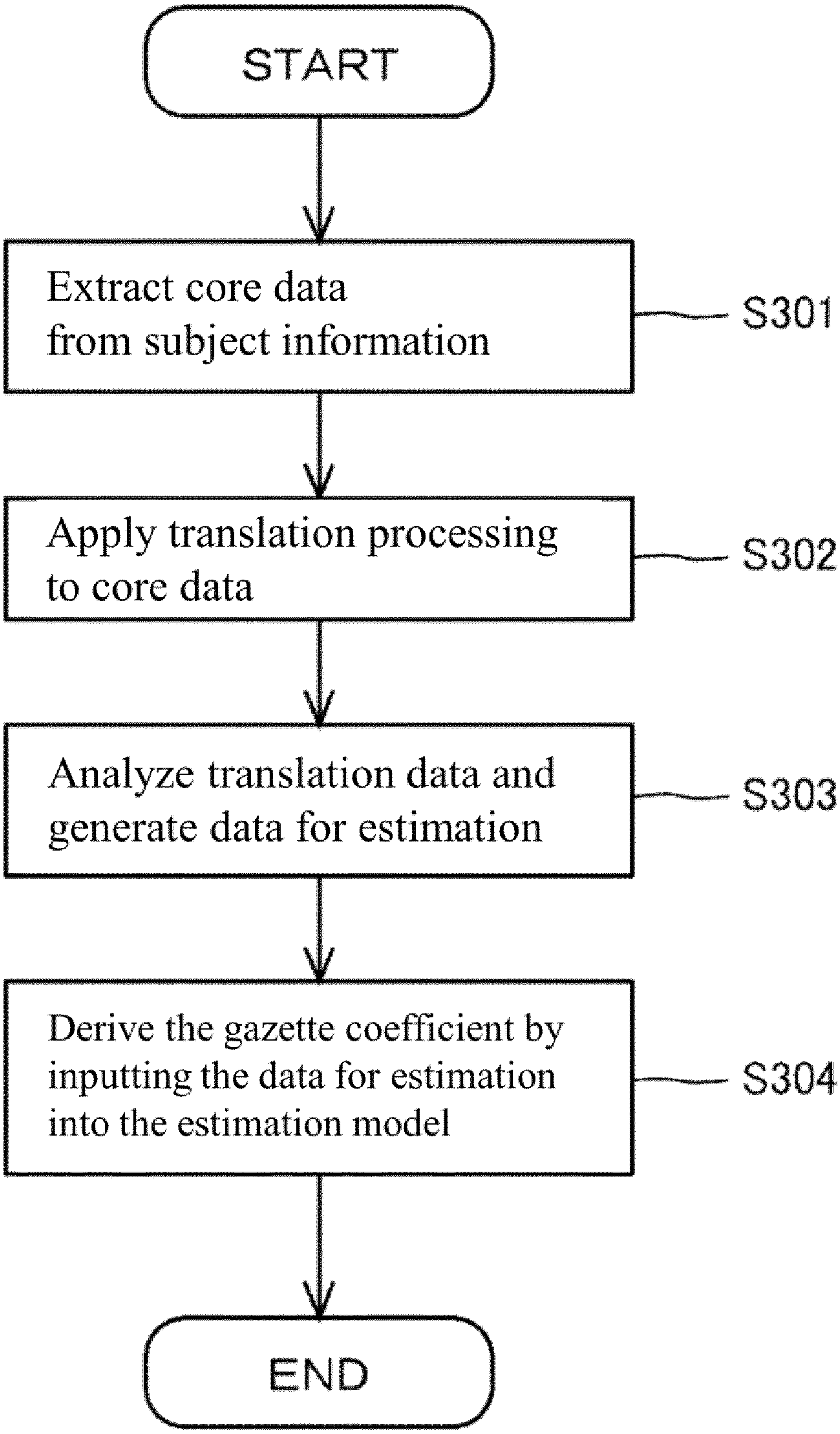
START
Extract core data from subject information
S301
Apply translation processing to core data
S302
Analyze translation data and generate data for estimation
S303
Derive the gazette coefficient by inputting the data for estimation into the estimation model
S304
END

Fig. 14

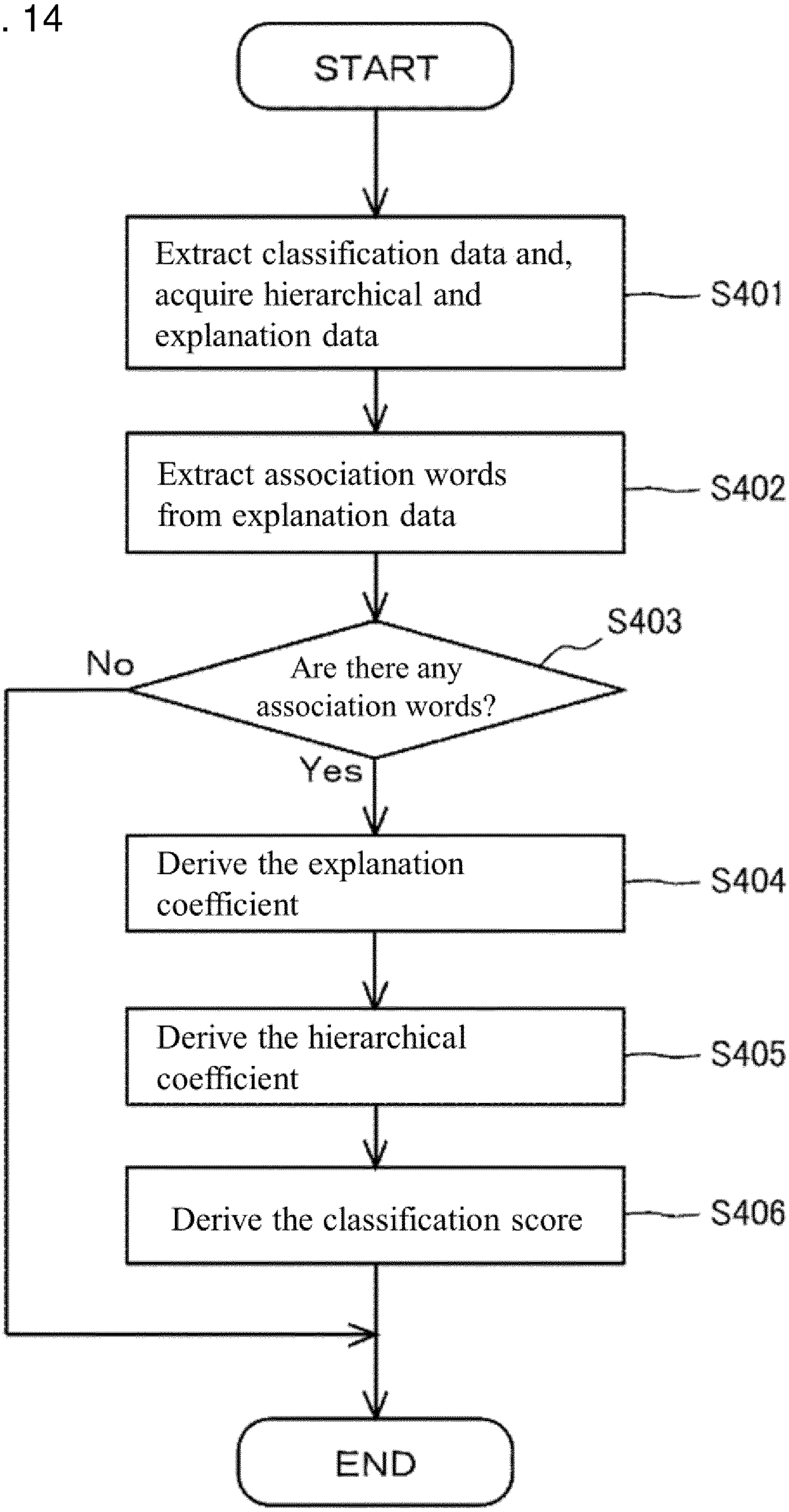
START
Extract classification data and, acquire hierarchical and explanation data
S401
Extract association words from explanation data
S402
S403
Are there any association words?
No
Yes
Derive the explanation coefficient
S404
Derive the hierarchical coefficient
S405
Derive the classification score
S406
END

Fig. 15

(12h)

| classification code | classification score (H) |
|---|---|
| $R_1$ | □□ |
| $R_2$ | □□ |
| ⋮ | ⋮ |
| $R_S$ | □□ |

Fig. 16

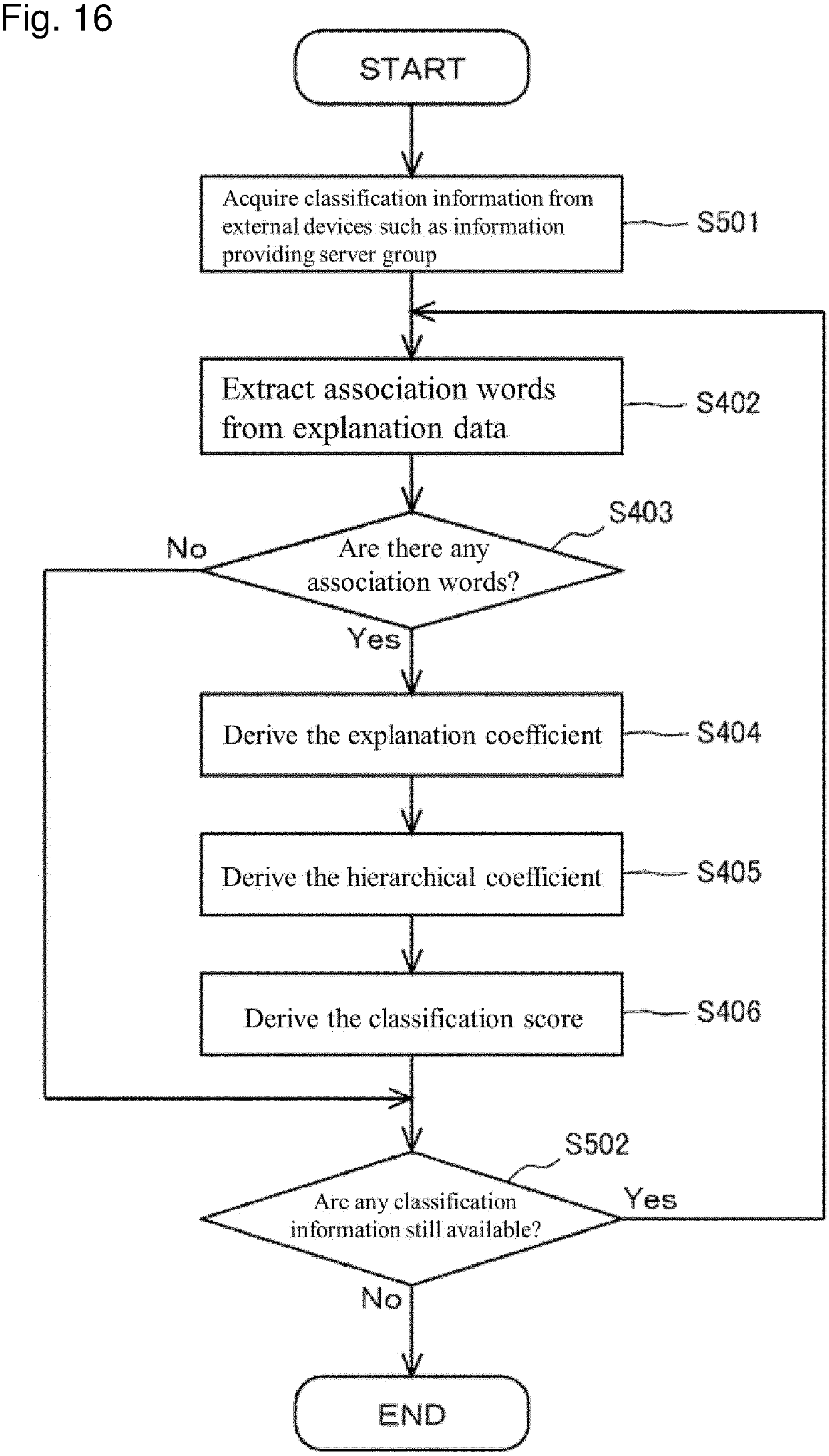
START
Acquire classification information from external devices such as information providing server group
S501
Extract association words from explanation data
S402
S403
Are there any association words?
No
Yes
Derive the explanation coefficient
S404
Derive the hierarchical coefficient
S405
Derive the classification score
S406
S502
Are any classification information still available?
Yes
No
END

Fig. 17

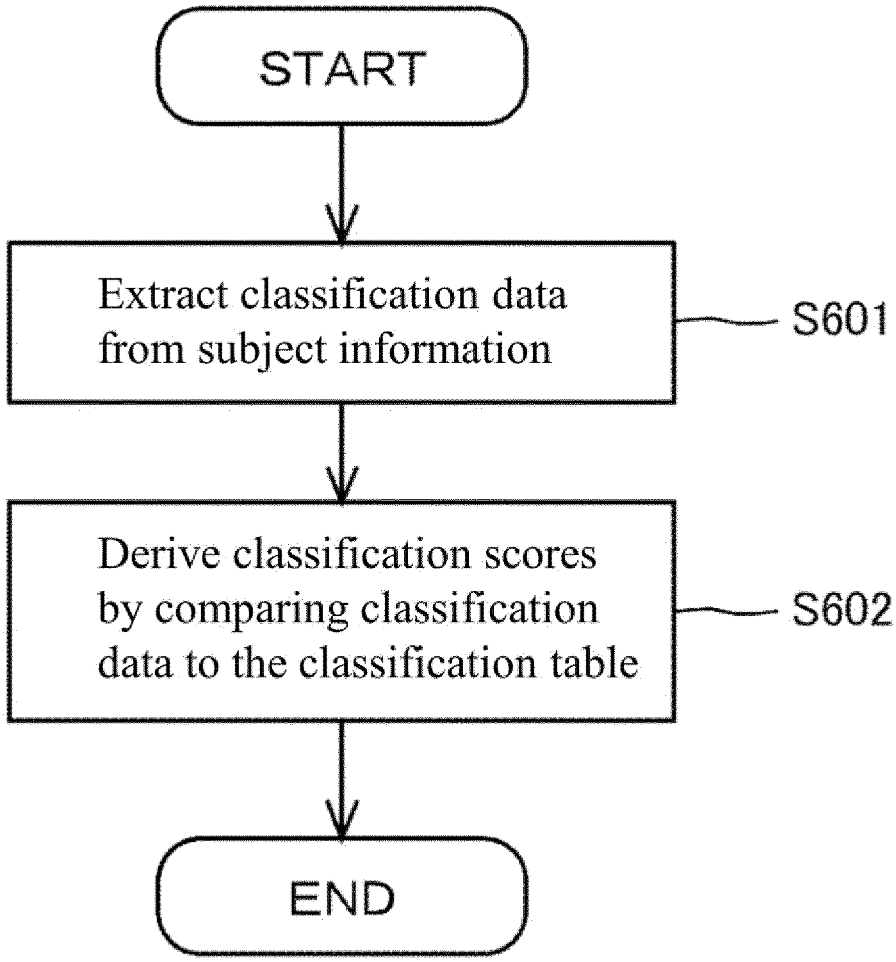
START
Extract classification data from subject information
S601
Derive classification scores by comparing classification data to the classification table
S602
END

## INTERNATIONAL SEARCH REPORT

International application No.
**PCT/JP2022/022254**

**A. CLASSIFICATION OF SUBJECT MATTER**

***G06Q 50/18***(2012.01)i; ***G06Q 10/06***(2012.01)i
FI: G06Q10/06; G06Q50/18 310

According to International Patent Classification (IPC) or to both national classification and IPC

**B. FIELDS SEARCHED**

Minimum documentation searched (classification system followed by classification symbols)

G06Q10/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2005/041096 A1 (IBB KK) 06 May 2005 (2005-05-06)<br>p. 25, lines 15-17, p. 52, line 12 to p. 55, line 26, fig. 25 | 1, 11 |
| Y | p. 25, lines 15-17, p. 52, line 12 to p. 55, line 26, fig. 25 | 2–10 |
| Y | CN 109447699 A (STATE GRID JIANGSU ELECTRIC POWER CO., LTD) 08 March 2019 (2019-03-08)<br>paragraph [0035] | 2-10 |
| A | KR 10-2011-0068277 A (KOREA INVENTION PROMOTION ASSOCIATION) 22 June 2011 (2011-06-22)<br>entire text, all drawings | 1-11 |
| A | JP 2021-33365 A (KANEKA CORP.) 01 March 2021 (2021-03-01)<br>entire text, all drawings | 1-11 |
| A | WO 2006/004132 A1 (IBB KK) 12 January 2006 (2006-01-12)<br>entire text, all drawings | 1-11 |
| A | JP 2005-326897 A (IBB KK) 24 November 2005 (2005-11-24)<br>entire text, all drawings | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/022254**

| Patent document cited in search report | Publication date (day/month/year) | Patent family member(s) | Publication date (day/month/year) |
|---|---|---|---|
| WO 2005/041096 A1 | 06 May 2005 | US 2007/0150510 A1<br>paragraphs [0012], [0413]-[0451], fig. 25<br>KR 10-2006-0096481 A<br>CN 1864170 A | |
| CN 109447699 A | 08 March 2019 | (Family: none) | |
| KR 10-2011-0068277 A | 22 June 2011 | (Family: none) | |
| JP 2021-33365 A | 01 March 2021 | (Family: none) | |
| WO 2006/004132 A1 | 12 January 2006 | US 2008/0071598 A1<br>US 2008/0021750 A1 | |
| JP 2005-326897 A | 24 November 2005 | US 2006/0122849 A1<br>WO 2004/061714 A1<br>KR 10-2005-0096924 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021504789 A